(19) Europäisches Patentamt / European Patent Office / Office européen des brevets

(11) **EP 2 897 247 B1**

(12) **EUROPEAN PATENT SPECIFICATION**

(45) Date of publication and mention
of the grant of the patent:
**13.09.2017 Bulletin 2017/37**

(21) Application number: **13837700.7**

(22) Date of filing: **28.06.2013**

(51) Int Cl.:
*H02J 7/00* (2006.01)     *H01M 10/44* (2006.01)
*H01M 10/48* (2006.01)     *H01M 10/04* (2006.01)

(86) International application number:
**PCT/JP2013/004058**

(87) International publication number:
**WO 2014/041730 (20.03.2014 Gazette 2014/12)**

(54) **STORAGE BATTERY MANAGEMENT DEVICE, AND STORAGE BATTERY MANAGEMENT METHOD**

SPEICHERBATTERIEVERWALTUNGSVORRICHTUNG UND
SPEICHERBATTERIEVERWALTUNGSVERFAHREN

DISPOSITIF DE GESTION DE BATTERIE DE STOCKAGE, ET PROCÉDÉ DE GESTION DE
BATTERIE DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.09.2012 JP 2012199559**

(43) Date of publication of application:
**22.07.2015 Bulletin 2015/30**

(73) Proprietor: **Panasonic Intellectual Property
Management Co., Ltd.
Osaka-shi, Osaka 540-6207 (JP)**

(72) Inventors:
• **SHIKATANI, Yukio**
  **Osaka 540-6207 (JP)**
• **TAKEMOTO, Yuichiro**
  **Osaka 540-6207 (JP)**
• **SUGIYAMA, Shigeyuki**
  **Osaka 540-6207 (JP)**
• **AOKI, Mamoru**
  **Osaka 540-6207 (JP)**

(74) Representative: **Grünecker Patent- und
Rechtsanwälte
PartG mbB
Leopoldstraße 4
80802 München (DE)**

(56) References cited:
**WO-A1-2012/081696      JP-A- H1 066 269
JP-A- 2006 197 676      JP-A- 2009 044 930
JP-A- 2012 010 563      JP-A- 2012 070 492
JP-A- 2012 175 763      US-A1- 2004 135 545
US-A1- 2012 187 898**

• **BRANDL M ET AL: "Batteries and battery
management systems for electric vehicles",
DESIGN, AUTOMATION&TEST IN EUROPE
CONFERENCE&EXHIBITION (DATE), 2012, IEEE,
12 March 2012 (2012-03-12), pages 971-976,
XP032320886, DOI: 10.1109/DATE.2012.6176637
ISBN: 978-1-4577-2145-8**

EP 2 897 247 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a storage battery management apparatus and a storage battery management method for adjusting the quantity of electricity stored in a storage battery.

Background Art

When five storage batteries each having a rated voltage of 1.2V are connected in series, the total voltage of the storage battery as a whole (hereinafter referred to as "storage battery group") is 6V and the storage battery group in this condition can cause a device of 6V to operate through discharge. Meanwhile, when five storage batteries, each having a rated voltage of 1.2V are connected in parallel, the voltage of this storage battery group is 1.2V. At this time, the respective storage batteries making up this storage battery group are simultaneously charged at a voltage obtained by adding an applied voltage necessary for charging to 1.2V which is the rated voltage of the storage battery.

PTL 1 discloses a technique (hereinafter referred to as "related art") that controls a switch to thereby perform discharging at a voltage different from a voltage used during charging. The related art switches a connection mode of a plurality of capacitors (or a plurality of storage batteries) between series and parallel connections through switch control, and thereby freely changes the overall voltage according to a voltage of a power generation apparatus or a voltage required by a loading apparatus.

For example, when the voltage of the capacitors is equal to the voltage of the power generation apparatus, the plurality of capacitors are charged in their connection mode switched to parallel. However, when the voltage of the power generation apparatus is higher than the voltage of the capacitors, the plurality of capacitors are charged in the connection mode switched to series. The same applies to a case where the plurality of capacitors are discharged. That is, the connection mode of the plurality of capacitors is switched between series, parallel or a combination thereof according to the voltage required by the loading apparatus.

According to the related art, for example, when the voltage of the power generation apparatus is higher than the voltage of the capacitors and the voltage required by the loading apparatus is lower, storage batteries connected in series are charged at a high voltage supplied from the power generation apparatus. Furthermore, according to the related art, the storage batteries are switched to parallel connection at the time of discharging, allowing the voltage to be changed to a low voltage required by the loading apparatus.

The capacitors described in the related art have an electric characteristic in that the quantity of electricity is proportional to a voltage. For this reason, when a plurality of capacitors connected in series are applied to the related art, it is possible to calculate the quantity of chargeable electricity of each capacitor by measuring a voltage of each capacitor. The quantity of chargeable electricity refers to the quantity of electricity indicating how much electricity can be charged from a current charging state to a fully charged state.

Citation List

Patent Literature

PTL 1
Japanese Patent Application Laid-Open No. 2004-23993

US2012/0187898 A1 relates to a rechargeable battery system and to rechargeable battery system operational methods. It is described that a rechargeable battery system includes a plurality of rechargeable battery cells coupled between a plurality of terminals and charge shuttling circuitry configured to couple with and shuttle electrical energy between individual ones of the rechargeable battery cells, and wherein the charge shuttling circuitry is configured to receive the electrical energy from one of the rechargeable battery cells at a first voltage and to provide the electrical energy to another of the rechargeable battery cells at a second voltage greater than the first voltage.

US 2004/135545 A1 provides a system for balancing state of charge among plural series connected electrical energy storage units that includes a power converter that selectively couples to an individual storage unit of the a string of electrical energy storage units and transfers energy by bidirectionally between the individual storage unit and the string of storage units.

WO 2012/081696 A1 aims at preventing deterioration of cells. According to the disclosed battery control method, cell voltage values of each of a plurality of cells are obtained, SOCs of each of the cells are calculated on the basis of the measured cell voltage values, an integrated current value is calculated by integrating the current value of a battery pack that is composed of a plurality of cells, cell capacity values of each of the cells are calculated on the basis of the integrated current value and the SOCs of the cells, cell dischargeable-capacity values are calculated from the cell capacity values and the SOCs of the cells, and charging/discharging of the battery pack are controlled on the basis of the cell dischargeable-capacity values.

Summary of Invention

Technical Problem

However, when a plurality of serially connected storage batteries are applied, the related art cannot accurately calculate the quantity of chargeable electricity of each storage battery by only measuring the voltage of each storage battery. Examples of the reason for this include (1) reduction of chargeable battery capacity due to deterioration of storage batteries with time, (2) calculation error of the quantity of electricity accompanying a voltage measurement error caused by the fact that the relationship between the quantity of electricity and a voltage has a non-linear electric characteristic curve, (3) individual differences due to differences in material or manufacturing process of storage batteries and (4) variation in electric characteristics due to operating environment (e.g., temperature) of storage batteries.

Since the related art is unable to accurately calculate the quantity of chargeable electricity of each storage battery, each storage battery is not fully charged. For example, according to the related art, during charging of serially connected storage batteries, when a storage battery having a least quantity of chargeable electricity reaches an overcharged state, other storage batteries are no longer charged even if the other storage batteries are chargeable. As a result, the related art has a problem in that electricity that should originally be supplied from the power generation apparatus to each storage battery is wasted and that it cannot fully charge the storage battery group to a chargeable capacity.

An object of the present invention is to provide a storage battery management apparatus and a storage battery management method capable of fully charging, in other words, efficiently charging a serially connected storage battery group up to a chargeable battery capacity of the storage battery group.

Solution to Problem

A storage battery management apparatus according to an aspect of the present invention is an apparatus that switches a number of storage batteries used or a number of storage batteries connected in series or in parallel as a connection mode of the plurality of storage batteries and that discharges or charges the storage batteries, the apparatus including: a chargeable electricity quantity management section that calculates and manages a quantity of chargeable electricity which is a quantity of electricity chargeable for each of the plurality of storage batteries to be charged from a current charging state to a fully charged state; and a chargeable electricity quantity adjusting section that controls discharging or charging of the plurality of storage batteries so that part or whole of the quantities of chargeable electricity of the plurality of storage batteries reaches a common target quantity of electricity.

A storage battery management method according to an aspect of the present invention is a method of switching a number of storage batteries used or a number of storage batteries connected in series or in parallel as a connection mode of the plurality of storage batteries and discharging or charging the storage batteries, the method including: calculating and managing a quantity of chargeable electricity which is a quantity of electricity chargeable for each of the plurality of storage batteries to be charged from a current charging state to a fully charged state; and controlling discharging or charging of the plurality of storage batteries so that part or whole of the quantities of chargeable electricity of the plurality of storage batteries reaches a common target quantity of electricity.

Advantageous Effects of Invention

According to the present invention, it is possible to perform efficient charging even when storage batteries are connected in series and charged.

Brief Description of Drawings

FIG. 1 is a block diagram illustrating an example of a storage battery management apparatus according to Embodiment 1 of the present invention;
FIG. 2 illustrates an example of a circuit configuration of the storage battery management apparatus according to Embodiment 1 of the present invention;

FIG. 3 is a flowchart illustrating an example of operation of the storage battery management apparatus according to Embodiment 1 of the present invention;

FIG. 4 is a block diagram illustrating an example of a storage battery management apparatus according to Embodiment 2 of the present invention;

FIG. 5 illustrates an example of a circuit configuration of the storage battery management apparatus according to Embodiment 2 of the present invention;

FIG. 6 illustrates an example of switching patterns of relay switches in the circuit configuration of the storage battery management apparatus according to Embodiment 2 of the present invention;

FIGS. 7A to 7C illustrate images of a connection mode of the storage battery corresponding to FIG. 6;

FIG. 8 is a block diagram illustrating an example of a storage battery management apparatus according to Embodiment 3 of the present invention;

FIG. 9 illustrates an example of a circuit configuration of the storage battery management according to Embodiment 3 of the present invention; and

FIG. 10 is a flowchart illustrating an example of operation of the storage battery management according to Embodiment 3 of the present invention.

Description of Embodiments

(Embodiment 1)

Embodiment 1 of the present invention is an example of a basic mode of the present invention.

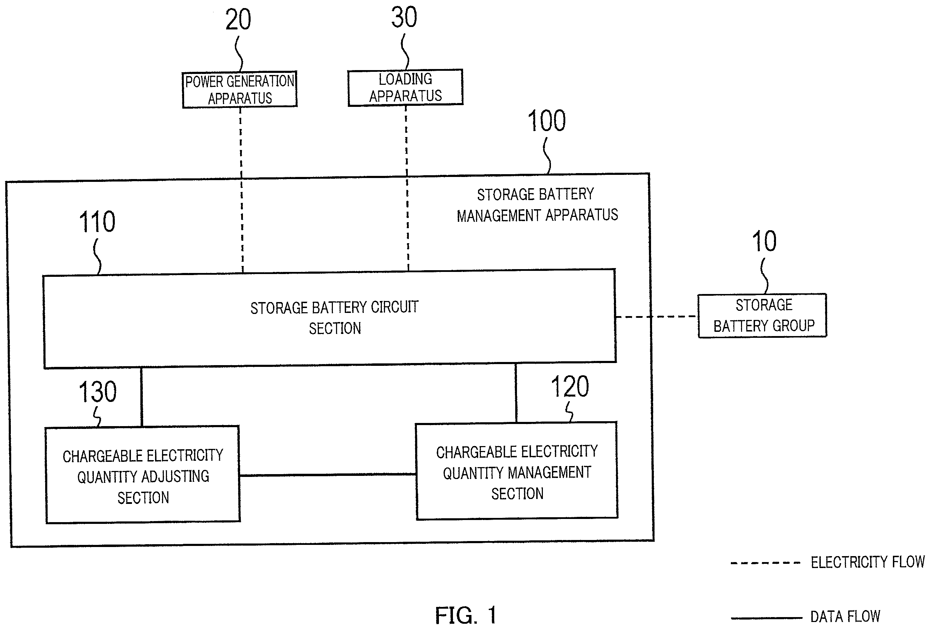

First, a configuration example of a storage battery management apparatus according to the present embodiment will be described. FIG. 1 is a block diagram illustrating an example of the storage battery management apparatus according to the present embodiment.

In FIG. 1, storage battery management apparatus 100 is connected to storage battery group 10, power generation apparatus 20 and loading apparatus 30 via a power line interface. In FIG. 1, dotted lines show electricity flows and solid lines show data flows.

In FIG. 1, storage battery management apparatus 100 is provided with a power line interface between itself, and power generation apparatus 20 and loading apparatus 30 respectively, but the embodiment is not limited to this. For example, storage battery management apparatus 100 need not be provided with a power line interface between itself and power generation apparatus 20. Alternatively, battery management apparatus 100 need not be provided with a power line interface between itself and loading apparatus 30.

Storage battery group 10 is constructed of two or more storage batteries. Storage battery group 10 is constructed of a series or parallel connection or a combination of series and parallel connections of a plurality of storage batteries. Examples of the storage battery include lithium ion (polymer) battery, lead storage battery, nickel hydrogen battery, niclcel-cadmium battery, and sodium sulfur battery.

Power generation apparatus 20 is an apparatus that generates electricity for charging storage battery group 10. Examples of power generation apparatus 20 include a motor-driven power generator whose power source is an electric motor, alternator, dynamo, generator, photovoltaic power generator, thermoelectric power generator, vibration power generator.

Loading apparatus 30 is an apparatus that operates using electricity discharged from storage battery group 10. Alternatively, loading apparatus 30 is an apparatus that stores electricity discharged from storage battery group 10. Examples of loading apparatus 30 include not only general electric devices such as a motor, LED (Light Emitting Diode) lighting fixture, but also electric automobiles or power assisted bicycles that move using stored electricity.

In FIG. 1, storage battery management apparatus 100 includes storage battery circuit section 110, chargeable electricity quantity management section 120 and chargeable electricity quantity adjusting section 130.

Storage battery management apparatus 100 includes a CPU (Central Processing Unit), a storage medium such as a ROM (Read Only Memory) that stores a control program and a working memory such as a RAM (Random Access Memory), for example. In this case, the respective functions of storage battery circuit section 110, chargeable electricity quantity management section 120 and chargeable electricity quantity adjusting section 130 are implemented by the CPU executing the control program.

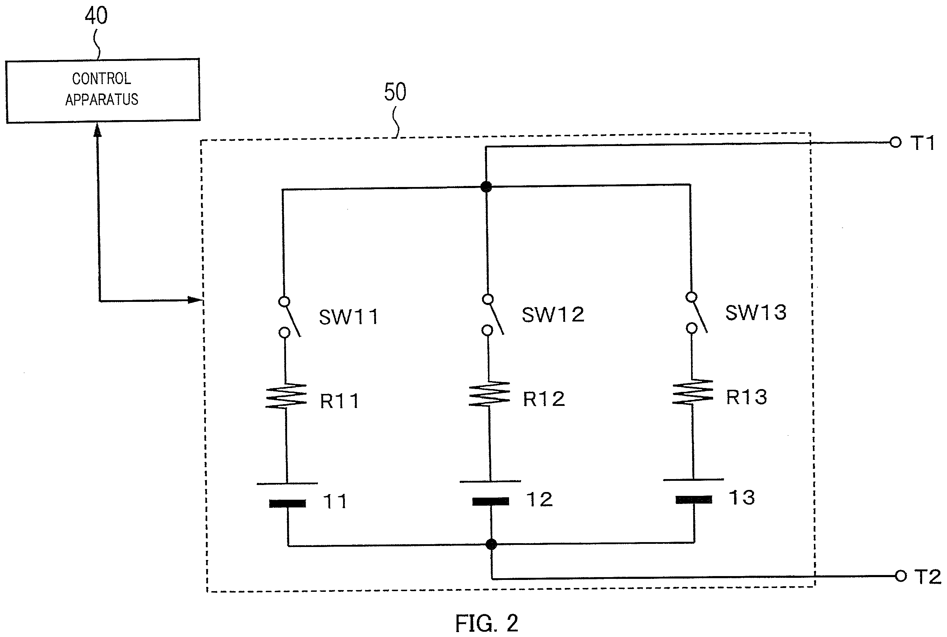

Storage battery circuit section 110 charges storage battery group 10 with electricity outputted from power generation apparatus 20 and discharges electricity stored in storage battery group 10 into loading apparatus 30. FIG. 2 illustrates an example of a circuit configuration of storage battery management apparatus 100. Here, the circuit configuration of storage battery circuit section 110 will be described using FIG. 2.

In FIG. 2, storage battery management apparatus 100 includes electric circuit 50 and control apparatus 40 that controls electric circuit 50. Terminals T1 and T2 are terminals for connection with power generation apparatus 20 or loading apparatus 30. Electric circuit 50 is an example of storage battery group 10 and storage battery circuit section 110. Control apparatus 40 includes chargeable electricity quantity management section 120 and chargeable electricity quantity adjusting section 130.

Electric circuit 50 includes storage batteries 11, 12 and 13, current shunt resistors R11, R12 and R13 and relay switches (hereinafter referred to as "relay") SW11, SW12 and SW13. Storage batteries 11, 12 and 13 correspond to storage battery group 10. Current shunt resistors R11, R12 and R13 are resistors for measuring currents flowing through storage batteries 11, 12 and 13. By measuring a potential difference due to a voltage drop of a current shunt resistor and dividing the potential difference by a resistance value of the current shunt resistor, the value of a current flowing through the storage battery is calculated. Relays SW11, SW12 and SW13 are relay switches for opening/closing an electrical path, namely switches for switching (turning ON/OFF) between connection states of storage batteries 11, 12 and 13. For example, when the connection state of relay SW11 is turned ON, that is, when the terminal is connected, a current flows through storage battery 11 connected in series. Meanwhile, when the connection state of relay SW11 is turned OFF, that is, when the terminal is not connected, no current flows through storage battery 11 connected in series.

Control apparatus 40 calculates an integrated value of the currents flowing through storage batteries 11, 12 and 13, respectively. Control apparatus 40 opens/closes (turns ON/OFF) relay SW11, SW12 and SW13 for controlling the currents flowing through storage batteries 11, 12 and 13, respectively.

In FIG. 2, the number of storage batteries is assumed to be three, but the number of storage batteries is not limited to this.

The circuit configuration of storage battery circuit section 110 has been described thus far.

Chargeable electricity quantity management section 120 calculates (measures) the current quantities of chargeable electricity of the respective storage batteries making up storage battery group 10 and manages (stores) the quantities. Note that chargeable electricity quantity management section 120 forms a part of control apparatus 40 in FIG. 2.

Here, how the quantity of chargeable electricity is calculated will be described. As described above, the quantity of chargeable electricity indicates how much electricity can be charted in a storage battery when the storage battery is charged from the current charging state to a fully charged state. More specifically, if the quantity of electricity stored in the storage battery is defined as the remaining capacity, the quantity of chargeable electricity is obtained by subtracting the remaining capacity from the rated electric capacity of the storage battery and further subtracting the electric capacity corresponding to deterioration of the storage battery (e.g., deterioration with time or deterioration in manufacturing processes) from the result of subtraction.

Chargeable electricity quantity management section 120 calculates the quantity of chargeable electricity fn (where "n" is the number of the storage battery, unit: [Ah](ampere hour)) using following equation a. The first term of equation a, fn_remaining denotes the current quantity of chargeable electricity of an n-th storage battery. The second term of equation a denotes an integrated value of the current (hereinafter referred to as "current integrated value"). That is, chargeable electricity quantity management section 120 calculates the quantity of chargeable electricity fn by adding the current integrated value (second term of equation a) to the current quantity of chargeable electricity fn_remaining. Chargeable electricity quantity management section 120 calculates fn at the next point in time by successively substituting the value of fn at the last point in time into fn-remaining.

$$f_n = f_{n\_remaining} + \int_{t1}^{t2} \left( \frac{V_n(t)}{R_n} \right) dt \cdots (a)$$

Rn of the second term of equation a is a resistance value (unit : [$\Omega$](ohm)) of the current shunt resistor connected in series to the n-th storage battery. As described above, in FIG. 2, the current shunt resistor corresponds to R11, R12 and R13. Vn(t) of the second term of equation a is a potential difference (unit: [V](voltage)) at time t caused by a voltage drop of the current shunt resistor connected in series to the n-th storage battery.

The method whereby chargeable electricity quantity management section 120 calculates the second term of equation a will be described. Chargeable electricity quantity management section 120 measures the potential difference value caused by the voltage drop of current shunt resistor Rn connected in series to the n-th storage battery from time t1 to time t2 first. Chargeable electricity quantity management section 120 performs A/D (Analog/Digital) conversion on the measured value and divides resultant voltage value Vn(t) by current shunt resistance value Rn, and multiplies the resultant current value by time (elapsed time from t1 to t2, unit: [h](hour)) to calculate the second term of equation a.

The calculation of the quantity of chargeable electricity has been described thus far.

Chargeable electricity quantity adjusting section 130 controls a current flowing through storage battery circuit section 110. Chargeable electricity quantity adjusting section 130 forms a part of control apparatus 40 in FIG. 2.

Here, the control of a current flowing through storage battery circuit section 110 will be described. More specifically, chargeable electricity quantity adjusting section 130 individually controls the discharging of each storage battery making up storage battery group 10. This allows chargeable electricity quantity adjusting section 130 to equalize the quantities of chargeable electricity among storage batteries. Examples of such a current control method of chargeable electricity quantity adjusting section 130 include (1) a method using a relay and (2) a method using a variable resistor.

First, (1) the method using a relay will be described. In this method, chargeable electricity quantity adjusting section 130 turns ON/OFF relays connected in series to each storage battery making up storage battery group 10. That is, chargeable electricity quantity adjusting section 130 passes a current through each storage battery by turning ON (connecting between terminals) the relays. Meanwhile, chargeable electricity quantity adjusting section 130 does not pass the current through each storage battery by turning OFF the relays (disconnecting between terminals). Thus, chargeable electricity quantity adjusting section 130 controls the currents flowing through the storage batteries, by turning ON/OFF the relays. In the case of the example in FIG. 2, chargeable electricity quantity adjusting section 130 turns ON/OFF relay SW11, SW12 and SW13 and thereby controls the currents flowing through storage batteries 11, 12 and 13, respectively.

Next, (2) the method using a variable resistor will be described. In this method, chargeable electricity quantity adjusting section 130 changes the value of a variable resistor connected in series to each storage battery making up storage battery group 10 and thereby changes the current flowing through each storage battery. That is, chargeable electricity quantity adjusting section 130 decreases the current flowing through each storage battery by increasing the value of the variable resistor. Meanwhile, chargeable electricity quantity adjusting section 130 increases the current flowing through each storage battery by decreasing the value of the variable resistor. Thus, chargeable electricity quantity adjusting section 130 controls the current flowing through each storage battery.

It should be noted that the current control method applied in the present embodiment is not limited to aforementioned methods (1) and (2). In the present embodiment, when the current flowing through each storage battery is small, an FET (Field Effect Transistor) may also be used instead of a relay.

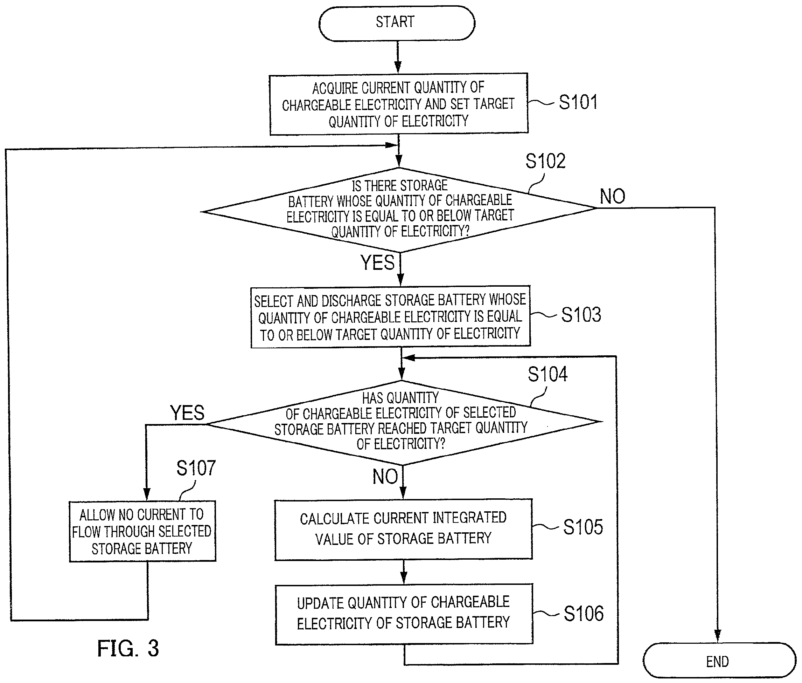

Next, an example of operation of the storage battery management apparatus according to the present embodiment will be described. FIG. 3 is a flowchart illustrating an example of operation whereby storage battery management apparatus 100 equalizes the quantities of chargeable electricity among storage batteries while controlling the currents flowing through the plurality of storage batteries. In describing FIG. 3, a case using the circuit configuration in FIG. 2 and using (1) the method using a relay will be described as an example hereinafter.

As an initial state of storage battery group 10, an assumption is made that all the storage batteries have the same quantity of chargeable electricity. This assumption applies to a case where all the storage batteries are unused batteries, for example. Chargeable electricity quantity management section 120 successively calculates and stores the current quantities of chargeable electricity of the respective storage batteries.

In step S101, chargeable electricity quantity adjusting section 130 acquires the current quantities of chargeable electricity of the respective storage batteries making up storage battery group 10 from chargeable electricity quantity management section 120. Chargeable electricity quantity adjusting section 130 then sets a target quantity of electricity. The target quantity of electricity is a target value of the quantity of chargeable electricity for each storage battery.

Various methods can be used to set the target quantity of electricity. Here, the method of setting the target quantity of electricity will be described below.

For example, chargeable electricity quantity adjusting section 130 sets the target quantity of electricity to a value between a minimum battery capacity and a maximum battery capacity of each storage battery making up storage battery group 10. With such setting, chargeable electricity quantity adjusting section 130 can equalize the quantities of chargeable electricity among the storage batteries.

For example, chargeable electricity quantity adjusting section 130 identifies a given storage battery from among the storage batteries making up storage battery group 10 and sets a target quantity of electricity to the quantity of chargeable electricity of the identified storage battery. With such setting, chargeable electricity quantity adjusting section 130 discharges some storage batteries of storage battery group 10 whose quantity of chargeable electricity is equal to or below the target quantity of electricity. In this way, storage battery management apparatus 100 can equalize the quantities of chargeable electricity among some storage batteries of storage battery group 10. Thus, when storage batteries having the same quantity of chargeable electricity are connected in series and charged, storage battery management apparatus 100 can efficiently charge the serially connected storage batteries with electricity outputted from the power generation apparatus.

Moreover, chargeable electricity quantity adjusting section 130 identifies, for example, a storage battery having the largest quantity of chargeable electricity among the storage batteries making up storage battery group 10 and sets the target quantity of electricity to the quantity of chargeable electricity of the identified storage battery. With such setting, chargeable electricity quantity adjusting section 130 discharges the storage batteries of storage battery group 10 other than the identified storage battery. In this way, storage battery management apparatus 100 can equalize the quantities of chargeable electricity among all the storage batteries of storage battery group 10. Thus, when charging all the serially connected storage batteries, storage battery management apparatus 100 can more efficiently charge the storage batteries with electricity outputted from the power generation apparatus.

For example, chargeable electricity quantity adjusting section 130 identifies a storage battery having the largest quantity of chargeable electricity among the storage batteries making up storage battery group 10 and sets the target quantity of electricity to a value even larger than the quantity of chargeable electricity of the identified storage battery. With such setting, chargeable electricity quantity adjusting section 130 discharges all the storage batteries. By so doing, storage battery management apparatus 100 can equalize the quantities of chargeable electricity among all the storage batteries of storage battery group 10. Thus, chargeable electricity quantity adjusting section 130 can further increase the quantity of chargeable electricity of each storage battery, and when charging a plurality of storage batteries connected in series, storage battery management apparatus 100 can charge each storage battery with more electricity outputted from the power generation apparatus.

Note that the method of setting a target quantity of electricity is not limited to the aforementioned setting methods. Any value may be set as a target quantity of electricity as long as it is a value within a range from a minimum battery capacity to a maximum battery capacity of the storage batteries making up storage battery group 10.

Examples of the method of setting a target quantity of electricity have been described thus far. Now, a case will be described as an example below where a target quantity of electricity is set to a quantity of chargeable electricity of a storage battery having the largest quantity of chargeable electricity among the storage batteries making up storage battery group 10.

In step S102, chargeable electricity quantity adjusting section 130 compares the current quantity of chargeable electricity of each storage battery acquired from chargeable electricity quantity management section 120 with a set target quantity of electricity and thereby determines whether there is any storage battery whose quantity of chargeable electricity is equal to or below the target quantity of electricity.

When the above-described determination result shows that there is no storage battery whose quantity of chargeable electricity is equal to or below the target quantity of electricity (S102: NO), the processing flow ends. However, when the above-described determination result shows that there is a storage battery whose quantity of chargeable electricity is equal to or below the target quantity of electricity (S102: YES), the processing flow proceeds to step S103.

In step S103, chargeable electricity quantity adjusting section 130 selects (identifies) a storage battery whose quantity of chargeable electricity is equal to or below the target quantity of electricity and performs control so as to discharge the selected storage battery. At this time, chargeable electricity quantity adjusting section 130 turns ON relays connected in series to the selected storage battery and turns OFF relays connected in series to storage batteries other than the selected storage battery. This causes only the selected storage battery to be discharged.

For example, in FIG. 2, when chargeable electricity quantity adjusting section 130 selects storage battery 11, it turns ON relay SW11 and turns OFF relay SW12 and relay SW13. In this step S103, the number of storage batteries selected by chargeable electricity quantity adjusting section 130 may be one or plural.

In step S104, chargeable electricity quantity adjusting section 130 determines whether or not the quantity of chargeable electricity of the selected storage battery has reached the target quantity of electricity through discharge.

When the above-described determination result shows that the quantity of chargeable electricity of the selected storage battery has reached the target quantity of electricity (S104: YES), the processing flow proceeds to step S107. However, when the above-described determination result shows that the quantity of chargeable electricity of the selected storage battery has not reached the target quantity of electricity (S104: NO), the processing flow proceeds to step S105.

In step S107, chargeable electricity quantity adjusting section 130 turns OFF relays connected in series to the selected storage battery in order to prevent any current from flowing from the selected storage battery. After that, the flow returns to step S102.

In step S105, chargeable electricity quantity management section 120 calculates an integrated value of the current discharged from the selected storage battery (current integrated value).

Aforementioned equation a is used to calculate the current integrated value. The first term in equation a, fn_remaining is the value of the current quantity of chargeable electricity managed by chargeable electricity quantity management section 120. Regarding the second term in equation a, chargeable electricity quantity adjusting section 130 measures the value of a potential difference caused by a voltage drop of the current shunt resistor connected in series to the storage battery selected in step S103 and performs A/D-conversion on the measured value to calculate a voltage value. Chargeable electricity quantity adjusting section 130 divides the calculated voltage value by the resistance value of the current shunt resistor and multiplies the resultant value (current value) by time to calculate a current integrated value.

Here, the second term in equation a will be described using FIG. 2. Upon selecting storage battery 11 in step S103, chargeable electricity quantity adjusting section 130 measures the value of a potential difference caused by a voltage drop of current shunt resistor R11, and performs A/D-conversion on the measured value to calculate a voltage value. Chargeable electricity quantity adjusting section 130 divides the calculated voltage value by the resistance value of current shunt resistor R11, and multiplies the resultant value (current value) by time to obtain a current integrated value.

In step S106, when there is any change in the calculated current integrated value, chargeable electricity quantity management section 120 updates the current quantity of chargeable electricity of each storage battery under its management. After that, the flow returns to step S104. That is, chargeable electricity quantity management section 120 repeats steps S104, S105 and S106 until the quantities of chargeable electricity of all the storage batteries reach the target quantity of electricity.

Through the above-described operation in FIG. 3, storage battery management apparatus 100 controls the discharging of the storage batteries making up storage battery group 10, and can thereby equalize the quantities of chargeable electricity among the storage batteries making up storage battery group 10. When the plurality of storage batteries are charged in the connection mode changed from parallel to series, this allows all the storage batteries to be charged to the full. That is, storage battery group 10 whose discharging is controlled by storage battery management apparatus 100 is charged efficiently. As a result, a loading apparatus using storage battery group 10 as a power source can operate for a long time.

In the operation in FIG. 3, an example has been described where a target quantity of electricity is set only once, but the present invention is not limited to this. For example, storage battery management apparatus 100 may successively set target quantities of electricity and repeats the processing of equalizing quantities of chargeable electricity among storage batteries, and thereby gradually increase the quantity of chargeable electricity. When a plurality of storage batteries connected in series are charged by so doing, more electricity outputted from the power generation apparatus is charged into each storage battery.

In the operation in FIG. 3, it has been assumed that all the storage batteries making up storage battery group 10 have the same value of quantity of chargeable electricity in an initial state, but the present invention is not limited to this. The quantities of chargeable electricity of storage batteries making up storage battery group 10 may have variations in an initial state. Examples of causes for such variations may include individual differences among the storage batteries due to continuous use of the same storage batteries (deterioration with time or the like) or differences in discharge characteristics affected by heat of a motor operating nearby. In this case, chargeable electricity quantity management section 120 may be provided with an interface that allows the current quantity of chargeable electricity of each storage battery making up storage battery group 10 to be inputted. This input interface may be configured to allow the current quantity of chargeable electricity of each storage battery to be automatically inputted when storage battery group 10 is connected to storage battery management apparatus 100 or to allow the current quantity of chargeable electricity of each storage battery to be manually inputted.

Thus, when the storage battery group is charged in another system or even when it is replaced by a new storage battery group, chargeable electricity quantity management section 120 can manage the quantity of chargeable electricity of each storage battery with a correct value, and can thereby equalize the quantities of chargeable electricity among storage batteries.

As described above, the storage battery management apparatus of the present embodiment calculates a current quantity of chargeable electricity for each storage battery making up the storage battery group. The storage battery management apparatus then compares each calculated quantity of chargeable electricity with a predetermined target quantity of electricity and selects a storage battery equal to or below the target quantity of electricity. The storage battery management apparatus controls the storage battery equal to or below the target quantity of electricity so as to discharge until the current quantity of chargeable electricity reaches the target quantity of electricity. The storage battery management apparatus repeats the discharge control until all the selected storage batteries reach the target quantity of electricity. In this way, the quantities of chargeable electricity of storage batteries connected to the storage battery management apparatus of the present embodiment are equalized. Therefore, the storage batteries whose discharging is controlled by the storage battery management apparatus of the present embodiment can be efficiently charged even when they are connected in series.

(Embodiment 2)

Embodiment 2 of the present invention is an example where the number of storage batteries connected in series (hereinafter referred to as "the number of serially connected batteries") is changed upon detecting a situation of connection with a loading apparatus (connection or no connection, voltage value or the like), and the storage batteries are discharged so as to equalize the quantities of chargeable electricity among all the storage batteries and the loading apparatus is operated. Changing the number of serially connected batteries at this time means, more specifically, switching the connection mode of the storage batteries to parallel connection. Furthermore, Embodiment 2 of the present invention is an example where the number of serially connected batteries is changed according to a situation of connection with the power generation apparatus and the storage batteries are charged. Changing the number of serially connected storage batteries at this time means, more specifically, switching the connection mode of the storage batteries to serial connection.

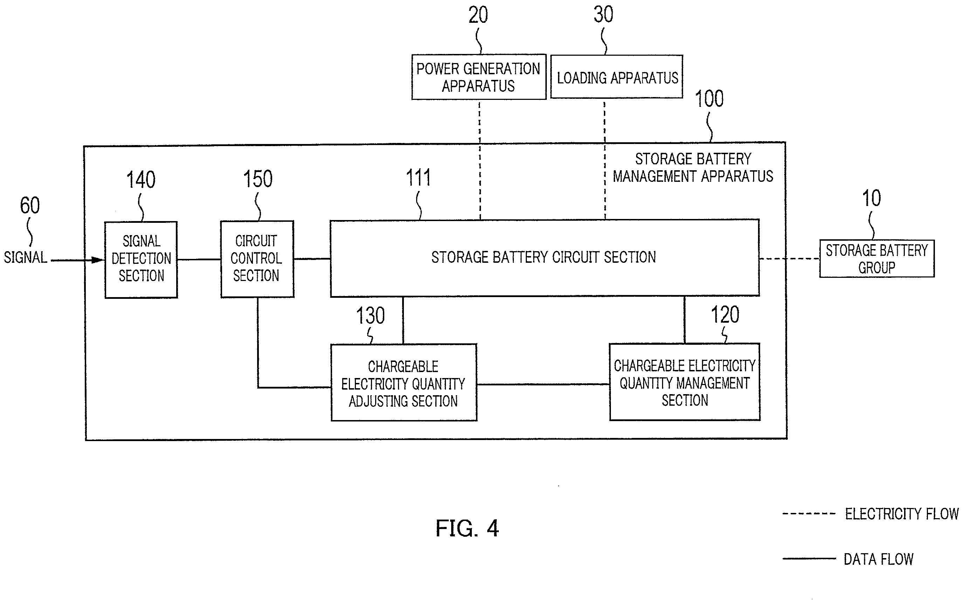

A configuration example of a storage battery management apparatus according to the present embodiment will be described first. FIG. 4 is a block diagram illustrating an example of the storage battery management apparatus according to the present embodiment. In FIG. 4, the same components as those in FIG. 1 are assigned the same reference numerals and description thereof will be omitted.

In FIG. 4, storage battery management apparatus 100 includes storage battery circuit section 111, chargeable electricity quantity management section 120, chargeable electricity quantity adjusting section 130, signal detection section 140 and circuit control section 150. Storage battery management apparatus 100 includes an interface to input signal 60 from outside. Signal 60 is a signal indicating a physical quantity. The physical quantity indicates, for example, natural phenomena (temperature, humidity, soil temperature/humidity, vibration, light, gas concentration or the like), mechanical, electromagnetic, thermal, acoustic, chemical features of artificial objects or spatial information or time information thereby indicated. In FIG. 4, dotted lines show electricity flows and solid lines show data flows as in the case of FIG. 1.

As in the case of Embodiment 1, storage battery management apparatus 100 in FIG. 4 is provided with a CPU, a storage medium such as a ROM and a working memory such as a RAM. In this case, the respective functions of storage battery circuit section 111, chargeable electricity quantity management section 120, chargeable electricity quantity adjusting section 130, signal detection section 140 and circuit control section 150 are implemented by the CPU executing a control program.

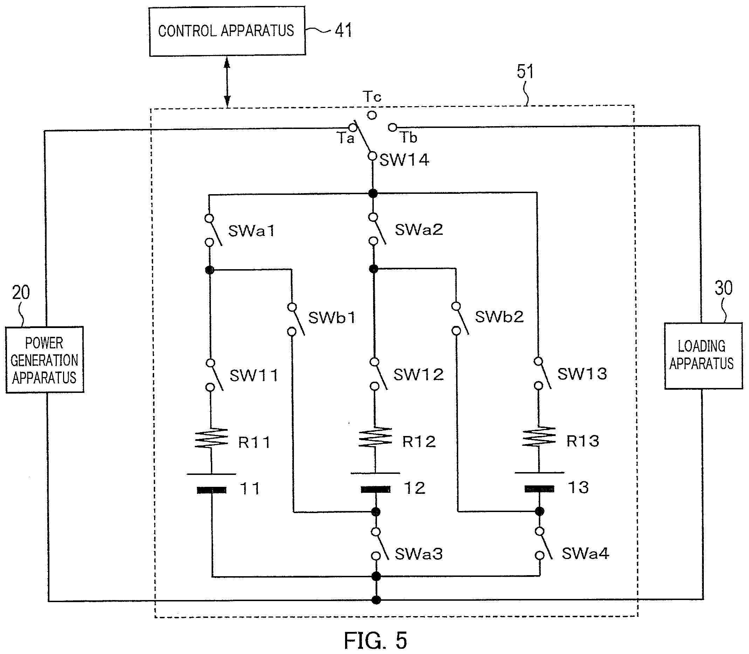

As in the case of storage battery circuit section 110 in FIG. 1, storage battery circuit section 111 is an electric circuit that charges storage battery group 10 with electricity outputted from power generation apparatus 20 and discharges electricity stored in storage battery group 10 into loading apparatus 30. FIG. 5 illustrates an example of a circuit configuration of storage battery management apparatus 100. Here, the circuit configuration of storage battery circuit section 110 will be described using FIG. 5.

In FIG. 5, storage battery management apparatus 100 includes electric circuit 51 and control apparatus 41 that controls electric circuit 51 and is connected to power generation apparatus 20 and loading apparatus 30. Electric circuit 51 is an example of storage battery group 10 and storage battery circuit section 111. Control apparatus 41 includes chargeable electricity quantity management section 120, chargeable electricity quantity adjusting section 130, signal detection section 140 and circuit control section 150.

In addition to the components of electric circuit 50 in FIG. 2, electric circuit 51 includes relay SW14, SWa1, SWa2, SWa3, SWa4, SWb1 and SWb2. Relay SW14 is a relay that selects to which of power generation apparatus 20 or loading apparatus 30, storage battery 11, 12 or 13 is to be connected. When relay SW14 is connected to terminal Ta, storage battery 11, 12, 13 is connected to power generation apparatus 20. When relay SW14 is connected to terminal Tb, storage battery 11, 12, 13 is connected to loading apparatus 30. When relay SW14 is connected to terminal Tc, storage battery 11, 12, 13 is connected to neither power generation apparatus 20 nor loading apparatus 30. Relay SWa1, SWa2, SWa3, SWa4, SWb1 and SWb2 are relays to change the number of serially connected batteries of storage batteries 11, 12 and 13.

Note that the number of storage batteries is assumed to be 3 in FIG. 5, but the number of storage batteries is not limited to this.

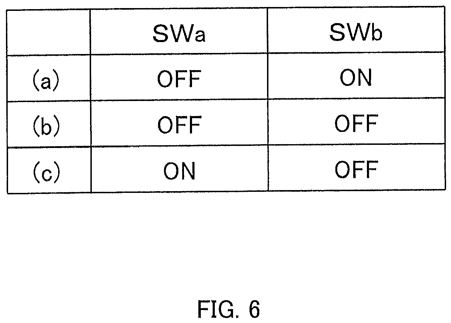

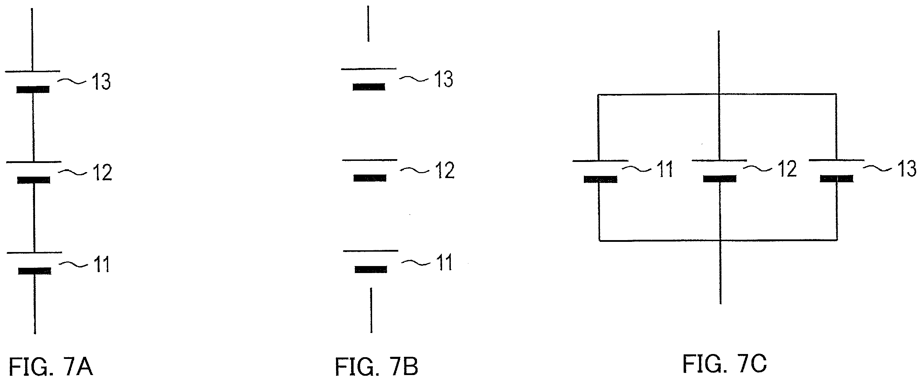

FIG. 6 illustrates an example of ON/OFF combinations of the relays in FIG. 5. In FIG. 6, ON/OFF in the SWa column indicates ON/OFF of relay SWa1, SWa2, SWa3 and SWa4, and ON/OFF of SWb indicates ON/OFF of relay SWb1 and SWb2. FIGS. 7A to 7C illustrate images of connection modes of storage batteries based on the ON/OFF combinations of the relays in FIG. 6.

Row (a) in FIG. 6 indicates that relay SWa1, SWa2, SWa3 and SWa4 are OFF and relay SWb1 and SWb2 are ON. The image of the connection mode of storage batteries 11, 12 and 13 corresponding thereto shows that the respective storage batteries are connected in series as shown in FIG. 7A.

Row (b) in FIG. 6 indicates that relay SWa1, SWa2, SWa3, SWa4, SWb1 and SWb2 are OFF. The image of the connection mode of storage batteries 11, 12 and 13 corresponding thereto shows that the three storage batteries are disconnected from the circuit as shown in FIG. 7B. Note that (b) in FIG. 6 indicates states when FIG. 6(a) is switched to FIG. 6(c) or FIG 6(c) is switched to FIG. 6(a).

Row (c) in FIG. 6 shows that relay SWa1, SWa2, SWa3 and SWa4 are ON, and relay SWb1 and SWb2 are OFF. The image of the connection mode of storage batteries 11, 12 and 13 corresponding to this is a state in which the respective storage batteries are connected in parallel as shown in FIG. 7C.

Control apparatus 41 calculates an integrated value of the currents flowing through storage batteries 11, 12 and 13, respectively. In order to control the currents flowing through storage batteries 11, 12 and 13, control apparatus 41 opens/closes (turns ON/OFF) relay SW11, SW12, SW13, SWa1, SWa2, SWa3, SWa4, SWb1 and SWb2 by switching to (a), (b) or (c) in FIG. 6 and switching SW14 to terminal Ta, Tb or Tc.

The circuit configuration of storage battery circuit section 111 has been described thus far.

Signal detection section 140 is a sensor that detects signal 60 and sends the detection result of signal 60 to circuit control section 150. Signal 60 detected by signal detection section 140 is a signal indicating, for example, a voltage value or a current value of power generation apparatus 20, a conduction state with loading apparatus 30 or a chargeable or non-chargeable state of loading apparatus 30. Examples of the detection result sent by signal detection section 140 to circuit control section 150 include a power supply signal and load connection signal. The power supply signal is a signal indicating the presence or absence of a power supply from power generation apparatus 20 or a voltage value or current value of power generation apparatus 20. The load connection signal is a signal indicating conduction or no conduction to (operation or no operation of) loading apparatus 30 or chargeable or non-chargeable. Signal detection section 140 is, for example, a voltage detection sensor, current detection sensor or conduction detection sensor. Note that signal detection section 140 may be constructed of not only one sensor but also two or more sensors.

Circuit control section 150 changes the number of serially connected storage batteries in storage battery circuit section 111 according to the detection result of signal 60 from signal detection section 140. More specifically, in FIG. 5, circuit control section 150 which is a component of control apparatus 41 changes the number of serially connected storage batteries by turning ON/OFF relay SWa1, SWa2, SWa3, SWa4, SWb1 and SWb2 making up electric circuit 51. In FIG. 4, circuit control section 150 switches relay SW14 making up electric circuit 51 in FIG. 5 according to the detection result of signal 60 from signal detection section 140. When relay SW14 is connected to terminal Ta, the storage batteries making up electric circuit 51 are connected to power generation apparatus 20. On the other hand, when relay SW14 is connected to terminal Tb, the storage batteries making up electric circuit 51 are connected to loading apparatus 30. When relay SW14 is connected to terminal Tc, the storage batteries making up electric circuit 51 are disconnected from power generation apparatus 20 and loading apparatus 30.

Next, as an example of changing the number of serially connected storage batteries according to the detection result of signal 60, processing of charging electricity from power generation apparatus 20 into storage battery group 10 and processing of discharging electricity of storage battery group 10 into loading apparatus 30 will be described. The circuit configuration shown in FIG. 5 is used in the following description.

For more specific description, in FIG. 5, an assumption is made that the voltage of power generation apparatus 20 is 96V, the voltage required by loading apparatus 30 is 32V and the voltages of storage batteries 11, 12 and 13 are 32V.

<During Charging>

When signal detection section 140 detects a power supply signal, storage battery management apparatus 100 charges the electricity outputted from power generation apparatus 20 into storage battery group 10. A more specific processing flow is as follows.

Signal detection section 140 that has detected the power supply signal sends a power supply signal to circuit control section 150. Circuit control section 150 connects relay SW14 in FIG. 5 to terminal Tc so that storage batteries 11, 12 and 13 are not connected to power generation apparatus 20. Next, circuit control section 150 changes the number of serially connected batteries of storage batteries 11, 12 and 13 in FIG. 5 according to the voltage of power generation apparatus 20. For example, when the voltage of power generation apparatus 20 is 96V, in order to equalize the voltage of power generation apparatus 20 with the voltage of the whole storage battery, three storage batteries 11, 12 and 13 having a voltage of 32V may be connected in series. In order to change the number of serially connected batteries to such a number, as shown in row (a) in FIG. 6, chargeable electricity quantity adjusting section 130 turns OFF relay SWa1, SWa2, SWa3 and SWa4, and turns ON relay SWb1 and SWb2. Circuit control section 150 connects relay SW14 in FIG. 5 to terminal Ta and connects electricity circuit 51 to power generation apparatus 20. Through this switching processing by these relays, storage battery management apparatus 100 passes the current from power generation apparatus 20 to storage batteries 11, 12 and 13, and storage batteries 11, 12 and 13 is thereby charged. Note that the voltage value of power generation apparatus 20 may be determined in advance or circuit control section 150 may receive the voltage value from signal detection section 140 as a power supply signal as described above.

<During Discharging>

When signal detection section 140 detects a load connection signal, storage battery management apparatus 100 discharges the electricity stored in storage battery group 10 into loading apparatus 30. A specific processing flow is as follows.

First, signal detection section 140 that has detected a load connection signal sends the load connection signal to circuit control section 150. Circuit control section 150 connects relay SW14 in FIG. 5 to terminal Tc so that storage batteries 11, 12 and 13 are not connected to loading apparatus 30. Next, circuit control section 150 changes the number of serially connected batteries of storage batteries 11, 12 and 13 in FIG. 5 according to the voltage required by loading apparatus 30. For example, when the voltage required by loading apparatus 30 is 32V, in order to equalize the voltage required by loading apparatus 30 with the voltage of the whole storage battery, storage batteries 11, 12 and 13 having a voltage of 32V may be connected in parallel (3-parallel, in other words, 1-series). To change the number of serially connected batteries to such a number, as shown in row (c) in FIG. 6, chargeable electricity quantity adjusting section 130 turns ON relay SWa1, SWa2, SWa3 and SWa4, and turns OFF relay SWb1 and SWb2. Circuit control section 150 then connects relay SW14 in FIG. 5 to terminal Tb and connects electricity circuit 51 and loading apparatus 30. Through this switching processing by relays, storage battery management apparatus 100 discharges electricity from storage batteries 11, 12 and 13 into loading apparatus 30. This discharge processing is similar to the processing flow in FIG. 3 according to Embodiment 1. The voltage value required by loading apparatus 30 may be determined in advance or circuit control section 150 may receive the voltage value from signal detection section 140 as a load connection signal as described above.

During discharge, as shown in the processing flow in FIG. 3, since the quantities of chargeable electricity of storage batteries 11, 12 and 13 become uniform, when storage batteries 11, 12 and 13 are connected in series (3-series) and then charged, all the storage batteries are equally and fully charged. Therefore, as in the case of Embodiment 1, the present embodiment can efficiently charge electricity outputted from the power generation apparatus into the storage batteries.

Thus, even when the voltage required by the loading apparatus is lower than the voltage of the power generation apparatus, the storage battery management apparatus of the present embodiment detects a power generation apparatus that supplies power or a connected loading apparatus and changes the number of serially connected storage batteries according to the voltage of the detected apparatus. For example, when a connection of the loading apparatus is detected, the storage battery management apparatus sets the number of serially connected storage batteries to the number of serially connected batteries or below during charging and discharges electricity from the storage batteries according to the voltage required by the loading apparatus. At this time, the storage battery management apparatus uniformly discharges the quantity of chargeable electricity of the storage batteries. When it is detected that power is supplied from the power generation apparatus, the storage battery management apparatus changes the number of serially connected storage batteries to the number of serially connected batteries or above during discharging according to the voltage of the power generation apparatus and charges the storage batteries. Thus, the storage battery management apparatus of the present embodiment can charge the storage batteries at the voltage of the power generation apparatus and discharge the storage batteries at a voltage stepped down to the voltage required by the loading apparatus (a voltage lower than the voltage of the power generation apparatus). As described in Embodiment 1, when the storage batteries are discharging electricity into the loading apparatus, the discharging is performed while equalizing the quantities of chargeable electricity among the storage batteries, and therefore when charging the electricity to be outputted into the storage batteries, the power generation apparatus can efficiently charge electricity outputted therefrom into the storage batteries. As a result, when the loading apparatus is connected to the storage battery management apparatus, the loading apparatus can operate for a long time.

A mechanism of voltage conversion in the storage battery management apparatus will be described more specifically. When discharging electricity into a loading apparatus having a voltage of 32V, the storage battery management apparatus of the present embodiment sets the number of serially connected storage batteries having a voltage of 32V to one. When charging electricity from the power generation apparatus having a voltage of 96V into the storage battery, the storage battery management apparatus of the present embodiment sets the number of serially connected storage batteries having a voltage of 32V to three. By changing the number of serially connected storage batteries in this way, the storage battery management apparatus of the present embodiment can perform downward transformation from a high voltage to a low voltage from a power generation apparatus which is the supply source of electricity on the loading apparatus which is the supply destination, making it possible to increase voltage conversion efficiency without thermal loss in a coil or the like.

Signal 60 detected by signal detection section 140 has been described above as a signal indicating a voltage value or current value of power generation apparatus 20, a conduction state with loading apparatus 30 (operating state) or chargeable or non-chargeable state of loading apparatus 30, but signal 60 is not limited to this. For example, signal 60 may also be a signal for detecting water leakage for storage battery management apparatus 100 or storage battery group 10. Upon detecting water leakage, signal detection section 140 sends a water leakage detection signal to circuit control section 150. Circuit control section 150 that has acquired the water leakage detection signal changes the number of serially connected batteries of storage batteries 11, 12 and 13 in FIG. 5. For example, circuit control section 150 reduces the number of serially connected batteries of the storage battery. In this case, as in the case of (c) in FIG. 6, the storage battery management apparatus of the present embodiment turns ON relay SWa1, SWa2, SWa3 and SWa4 and turns OFF relay SWb1 and SWb2. In this way, the storage battery management apparatus of the present embodiment can instantaneously step down the voltage of the storage battery from 96V to 32V, for example, and it is thereby possible to immediately step down the voltage of the whole storage battery to a voltage that is safe to the human body and secure safety of users.

As described above, in addition to the configuration of Embodiment 1, the storage battery management apparatus of the present embodiment includes the signal detection section that detects a physical event change and the circuit control section that changes the number of serially connected batteries of the storage battery group according to the detection and switches the electricity supply source or electricity supply destination, and can increase the number of serially connected batteries of the storage battery group at the time of charging more than the number of serially connected batteries during discharging. In this way, the storage battery management apparatus of the present embodiment can realize downward transformation from a high-voltage power generation apparatus into a loading apparatus requiring a low voltage. Therefore, when operating the loading apparatus requiring a lower voltage than the voltage of the power generation apparatus, using the storage battery management apparatus of the present embodiment can achieve high voltage conversion efficiency without thermal loss at a coil or the like. Moreover, since the storage battery management apparatus can efficiently charge the electricity outputted from the power generation apparatus into the storage battery, the loading apparatus connected to the storage battery management apparatus can operate for a long time.

(Embodiment 3)

Embodiment 3 of the present invention is an example where the charging of a storage battery is controlled by changing the number of serially connected storage batteries according to a voltage of a power generation apparatus and by switching a combination of serially connected storage batteries so as to equalize the quantities of chargeable electricity among all storage batteries.

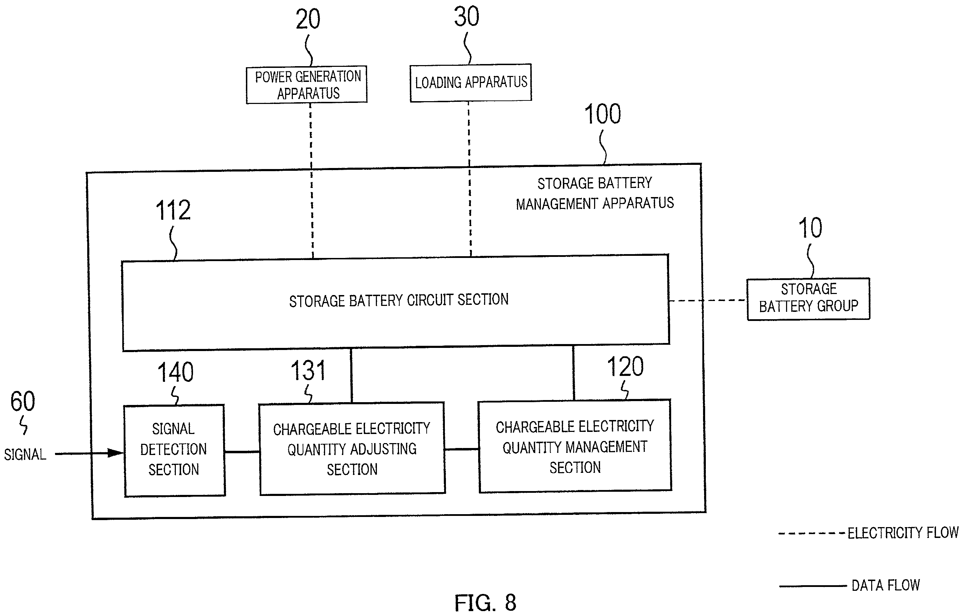

A configuration example of a storage battery management apparatus according to the present embodiment will be described. FIG. 8 is a block diagram illustrating an example of the storage battery management apparatus according to the present embodiment. In FIG. 8, the same components as those in FIG. 4 are assigned the same reference numerals and description thereof will be omitted.

In FIG. 8, storage battery management apparatus 100 includes storage battery circuit section 112, chargeable electricity quantity management section 120, chargeable electricity quantity adjusting section 131 and signal detection section 140. Storage battery management apparatus 100 also includes an interface to input signal 60 from outside. Signal 60 is a signal indicating a physical quantity. In FIG. 8, dotted lines show where electricity flows and solid lines show where data flows as in the case of FIG. 1.

As in the case of Embodiment 1, storage battery management apparatus 100 in FIG. 8 is provided with a CPU, a storage medium such as a ROM and a work memory such as a RAM. In this case, the respective functions of storage battery circuit section 112, chargeable electricity quantity management section 120, chargeable electricity quantity adjusting section 131 and signal detection section 140 are implemented by the CPU executing a control program.

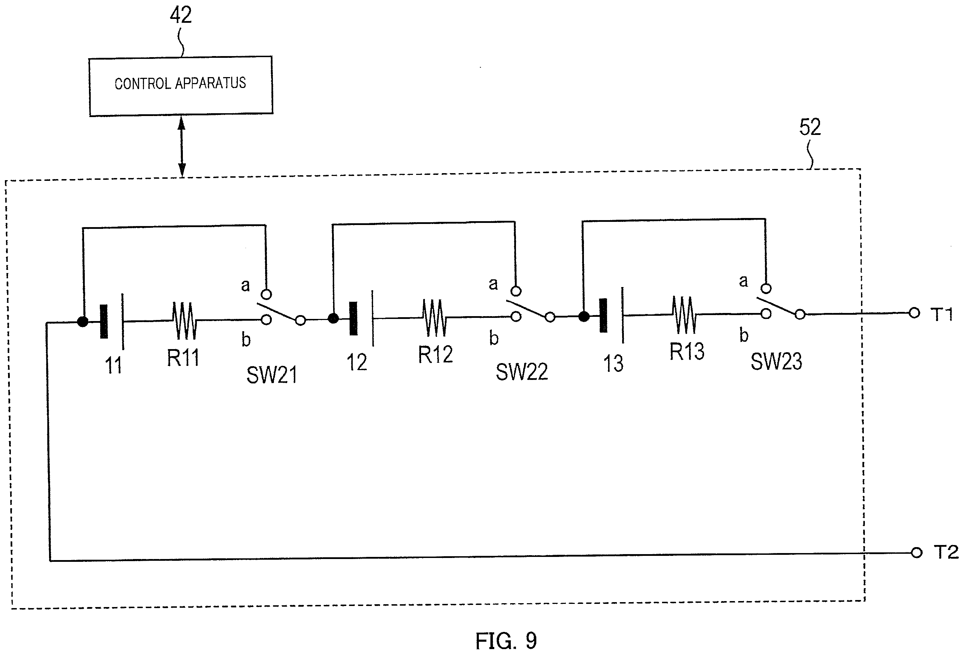

As in the case of storage battery circuit section 110 in FIG. 1, storage battery circuit section 112 is an electric circuit that charges storage battery group 10 with electricity from power generation apparatus 20 and discharges electricity stored in storage battery group 10 into loading apparatus 30. FIG. 9 illustrates an example of a circuit configuration of storage battery management apparatus 100. Here, a circuit configuration of storage battery circuit section 112 will be described using FIG. 9. In FIG. 9, the same components as those in FIG. 2 are assigned the same reference numerals and description thereof will be omitted.

In FIG. 9, storage battery management apparatus 100 includes electricity circuit 52 and control apparatus 42 that controls electricity circuit 52, and is connected to power generation apparatus 20 and loading apparatus 30. Electricity circuit 52 is an example of storage battery group 10 and storage battery circuit section 112. Control apparatus 42 includes chargeable electricity quantity management section 120, chargeable electricity quantity adjusting section 131 and signal detection section 140.

Electricity circuit 52 includes storage batteries 11, 12 and 13, current shunt resistors R11, R12 and R13, relay SW21, SW22 and SW23. Relays SW21, SW22 and SW23 are relay switches for switching an electrical path, namely, switches for switching the number of serially connected batteries and combinations of serially connected storage batteries of storage batteries 11, 12 and 13. When relay SW21 is connected to the terminal a side, no electricity flows through storage battery 11 and current shunt resistor R11. However, when relay SW21 is connected to the terminal b side, electricity flows through storage battery 11 and current shunt resistor R11. Relay SW22 and SW23 perform switching of the electrical path based on the same mechanism as that of relay SW21.

Control apparatus 42 calculates an integrated value of the currents flowing through storage batteries 11, 12 and 13, respectively. Control apparatus 42 switches relay SW21, SW22 and SW23 according to a voltage of an external apparatus connected to terminals T1 and T2. The following description assumes that the external apparatus connected to terminals T1 and T2 is power generation apparatus 20.

When two storage batteries are connected in series (2-series), control apparatus 42 performs one type of control shown below. For example, control apparatus 42 connects relay SW21 and relay SW22 to the terminal b side and connects relay SW23 to the terminal a side to make a 2-series connection of storage batteries 11 and 12. Alternatively, control apparatus 42 connects relay SW22 and relay SW23 to the terminal b side and connects relay SW21 to the terminal a side to make a 2-series connection of storage batteries 12 and 13. Alternatively, control apparatus 42 connects relay SW21 and relay SW23 to the terminal b side and connects relay SW22 to the terminal a side to make a 2-series connection of storage batteries 11 and 13.

In FIG. 9, the number of storage batteries is assumed to be three, but the number of storage batteries is not limited to this.

The circuit configuration of storage battery circuit section 112 has been described thus far.

Since the method for chargeable electricity quantity management section 120 to calculate a quantity of chargeable electricity is similar to that of Embodiment 1, description thereof will be omitted. Note that chargeable electricity quantity management section 120 forms a part of control apparatus 42 in FIG. 9.

Chargeable electricity quantity adjusting section 131 changes the number of serially connected storage batteries of storage battery group 10 according to the voltage of power generation apparatus 20 connected to terminals T1 and T2, and switches a combination of the serially connected storage batteries to thereby control a current flowing through storage battery circuit section 112. Chargeable electricity quantity adjusting section 131 forms a part of control apparatus 42 in FIG. 9.

Here, control of the current flowing through storage battery circuit section 112 will be described. More specifically, chargeable electricity quantity adjusting section 131 individually controls the charging of each storage battery making up storage battery group 10. Thus, chargeable electricity quantity adjusting section 131 equalizes the quantities of chargeable electricity among the respective storage batteries. Such a method of controlling the quantity of electricity by chargeable electricity quantity adjusting section 131 is the same as that by chargeable electricity quantity adjusting section 130 in FIG. 1 of Embodiment 1, and includes (1) a method using a relay and (2) a method using a variable resistor, and description of the methods will be omitted.

Signal detection section 140 is a sensor that detects signal 60 and sends the detection result of signal 60 to chargeable electricity quantity adjusting section 131. Signal 60 detected by signal detection section 140 is a signal indicating, for example, a voltage value of power generation apparatus 20, a voltage value required by loading apparatus 30. Signal detection section 140 sends the signal to chargeable electricity quantity adjusting section 131. Signal detection section 140 is, for example, a voltage detection sensor or conduction detection sensor. Signal detection section 140 is not limited to one sensor but may be constructed of two or more sensors.

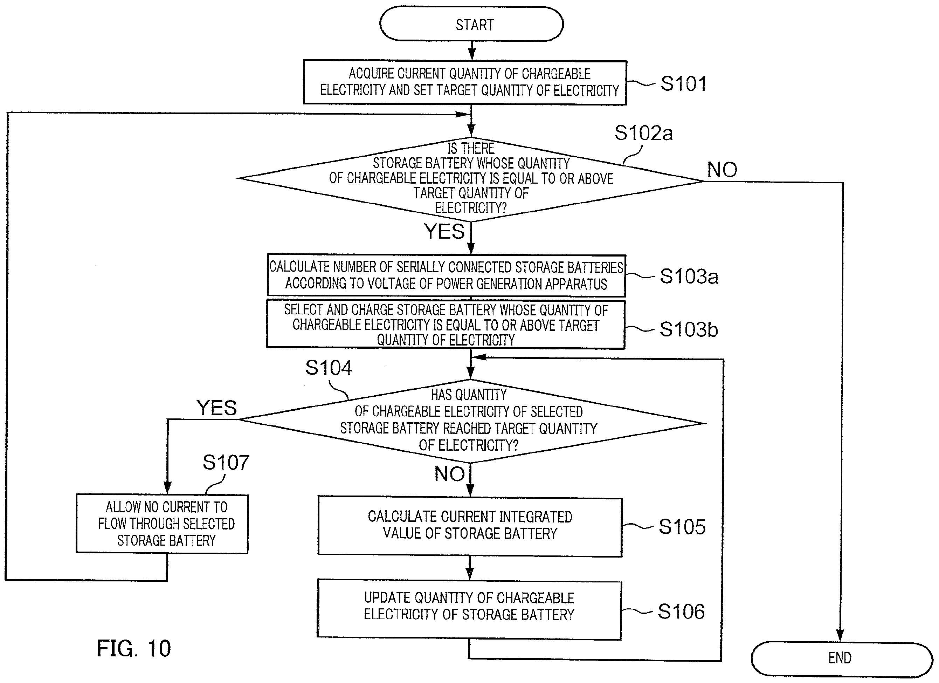

Next, an example of operation of the storage battery management apparatus according to the present embodiment will be described. FIG. 10 is a flowchart illustrating an example of operation of storage battery management apparatus 100 that equalizes the quantities of chargeable electricity among the respective storage batteries while controlling the currents flowing through a plurality of storage batteries. In FIG. 10, the same processes as those in FIG. 3 are assigned the same reference numerals and description thereof will be omitted. In describing FIG. 10, the circuit configuration in FIG. 9 is used and a case using (1) a method using a relay described in Embodiment 1 will be described as an example of the current control method.

As an initial state of storage battery group 10, an assumption is made that the quantities of chargeable electricity of all the storage batteries have the same value. This assumption applies to, for example, a case where all the storage batteries are unused batteries. Chargeable electricity quantity management section 120 successively calculates and stores the current quantities of chargeable electricity of the respective storage batteries.

Step S101 is the same process as that in FIG. 3, and so description thereof will be omitted. A case will be described below as an example where a target quantity of electricity is set to the quantity of chargeable electricity of a storage battery having a smallest quantity of chargeable electricity among the storage batteries making up storage battery group 10.

In step S102a, chargeable electricity quantity adjusting section 131 compares each current quantity of chargeable electricity acquired from chargeable electricity quantity management section 120 with the set target quantity of electricity and thereby determines whether or not there is any storage battery whose quantity of chargeable electricity is equal to or above the target quantity of electricity.

When the above-described determination result shows that there is no storage battery whose quantity of chargeable electricity is equal to or above the target quantity of electricity (S102a: NO), the processing flow ends. However, when the above-described determination result shows that there is a storage battery whose quantity of chargeable electricity is equal to or above the target quantity of electricity (S102a: YES), the processing flow proceeds to step S103a.

In step S103a, chargeable electricity quantity adjusting section 131 calculates the number of serially connected storage batteries according to the voltage of power generation apparatus 20 connected to terminals T1 and T2 in FIG. 9. At this time, chargeable electricity quantity adjusting section 131 acquires the voltage value of power generation apparatus 20 from signal detection section 140.

In step S103b, chargeable electricity quantity adjusting section 131 selects (identifies) a storage battery whose quantity of chargeable electricity is equal to or above the target quantity of electricity and charges the selected storage battery. At this time, chargeable electricity quantity adjusting section 131 switches relays so that only the selected storage battery is connected in series and switches relays so that storage batteries other than the selected storage battery are not connected in series. In this way, chargeable electricity quantity adjusting section 131 charges only the selected storage battery. In FIG. 9, for example, when storage battery 11 and storage battery 12 are selected, chargeable electricity quantity adjusting section 131 connects relay SW21 and relay SW22 to the terminal b side, and connects relay SW23 to the terminal a side. The number of storage batteries selected by chargeable electricity quantity adjusting section 131 in step S103b may be one or plural.

The method for chargeable electricity quantity adjusting section 131 to select (identify) a storage battery in step S103b will be described. Chargeable electricity quantity adjusting section 131 compares the quantities of chargeable electricity of the respective storage batteries and sorts them in descending order of quantities of chargeable electricity. Chargeable electricity quantity adjusting section 131 selects storage batteries corresponding in number to the serially connected batteries calculated in step S103a in the sorted descending order of quantities of chargeable electricity.

Steps S104, S105, S106 and S107 are the same processes as those in FIG. 3, and description thereof will be omitted.

Through the above-described operation in FIG. 10, when serially connecting and charging some storage batteries among the storage batteries making up storage battery group 10, storage battery management apparatus 100 can equalize the quantities of chargeable electricity among the storage batteries making up storage battery group 10. This allows all the storage batteries to be fully charged. That is, even when the voltage of power generation apparatus 20 changes, storage battery management apparatus 100 can fully and impartially charge all the storage batteries. As a result, the loading apparatus using the storage battery as a power source can operate for a long time.

In step S103a in FIG. 10, chargeable electricity quantity adjusting section 131 acquires a voltage value of power generation apparatus 20 from signal detection section 140, but the present invention is not limited to this. Chargeable electricity quantity adjusting section 131 may acquire (store) the voltage of power generation apparatus 20 connected to terminals T1 and T2 in FIG. 9 beforehand. For example, in FIG. 8, the voltage value of power generation apparatus 20 may be stored in a storage medium of storage battery management apparatus 100, and chargeable electricity quantity adjusting section 131 may acquire the voltage value instead of acquiring the voltage value of power generation apparatus 20 from signal detection section 40.

Embodiments 1, 2 and 3 have been described thus far, but the description above is an example and various modifications can be made.

In foregoing Embodiments 1, 2 and 3, a case has been described as an example where the respective sections of storage battery management apparatus 100 are configured with hardware, but the respective sections of storage battery management apparatus 100 may also be provided by software in cooperation with hardware.

The rated battery capacities of the respective storage batteries making up storage battery group 10 in Embodiments 1, 2 and 3 may be the same or may be different. That is, Embodiments 1, 2 and 3 are independent of the rated battery capacities of the respective storage batteries used.

In above Embodiment 3, storage battery management apparatus 100 changes the number of serially connected storage batteries according to the voltage of power generation apparatus 20 connected to terminals T1 and T2 in FIG. 9, but the present invention is not limited to this. For example, storage battery management apparatus 100 may connect loading apparatus 30 to terminals T1 and T2 in FIG. 9, change the number of serially connected batteries of the storage batteries making up storage battery group 10 and change a combination of storage batteries to be discharged according to the voltage required by loading apparatus 30, and equalize the quantities of chargeable electricity among all storage batteries.

An example of operation of aforementioned storage battery management apparatus 100 will be described using FIG. 10. In FIG. 10, the description of steps S101, S104, S105, S106 and S107 which are the same processes as those in FIG. 3 will be omitted.

In FIG. 10, in step S102a, like step S102 in FIG. 3, chargeable electricity quantity adjusting section 131 determines whether or not there is any storage battery equal to or below a target quantity of electricity. In step S103a in FIG. 10, chargeable electricity quantity adjusting section 131 calculates the number of serially connected storage batteries making up storage battery group 10 according to not the voltage of power generation apparatus 20 connected to terminals T1 and T2 in FIG. 9 but the voltage required by loading apparatus 30 connected to terminals T1 and T2 in FIG. 9. In step S103b in FIG. 10, chargeable electricity quantity adjusting section 131 performs not charging but discharging of the selected storage battery.

As described above, storage battery management apparatus 100 controls the discharging or charging of storage battery group 10, and can thereby equalize the quantities of chargeable electricity among the respective storage batteries making up storage battery group 10. In this way, when charging the storage batteries making up storage battery group 10 by changing the number of serially connected storage batteries, it is possible to charge all serially connected storage batteries of the storage battery group to an equally and fully charged state. Therefore, storage battery management apparatus 100 can efficiently charge electricity outputted from power generation apparatus 20 into each storage battery. As a result, loading apparatus 30 using the storage battery as a power source can operate for a long time.

As has been described above, a storage battery management apparatus according to the present disclosure is an apparatus that switches a number of storage batteries used or a number of storage batteries connected in series or in parallel as a connection mode of the plurality of storage batteries and that discharges or charges the storage batteries, the apparatus including: a chargeable electricity quantity management section that calculates and manages a quantity of chargeable electricity which is a quantity of electricity chargeable for each of the plurality of storage batteries to be charged from a current charging state to a fully charged state; and a chargeable electricity quantity adjusting section that controls discharging or charging of the plurality of storage batteries so that part or whole of the quantities of chargeable electricity of the plurality of storage batteries reaches a common target quantity of electricity.

In addition, in the storage battery management apparatus according to the present disclosure, the chargeable electricity quantity adjusting section starts discharging a storage battery whose quantity of chargeable electricity is equal to or below the target quantity of electricity, and the chargeable electricity quantity adjusting section ends discharging the storage battery when the quantity of chargeable electricity of the storage battery reaches the target quantity of electricity.

In the storage battery management apparatus according to the present disclosure, the chargeable electricity quantity adjusting section calculates an integrated value of a current flowing through the storage battery after starting discharging the storage battery whose quantity of chargeable electricity is equal to or below the target quantity of electricity until the quantity of chargeable electricity of the storage battery reaches the target quantity of electricity, and updates the quantity of chargeable electricity based on the integrated value of the current.

In the storage battery management apparatus according to the present disclosure, the chargeable electricity quantity adjusting section identifies a storage battery from among the plurality of storage batteries and sets the quantity of chargeable electricity of the identified storage battery as the target quantity of electricity.

In the storage battery management apparatus according to the present disclosure, the chargeable electricity quantity adjusting section identifies a storage battery having a largest quantity of chargeable electricity among the plurality of storage batteries and sets the quantity of chargeable electricity of the identified storage battery as the target quantity of electricity.

In the storage battery management apparatus according to the present disclosure, the chargeable electricity quantity adjusting section identifies a storage battery having a largest quantity of chargeable electricity among the plurality of storage batteries and sets a value even larger than the quantity of chargeable electricity of the identified storage battery as the target quantity of electricity.

The storage battery management apparatus according to the present disclosure, further includes: a signal detection section that detects a physical event change on the storage battery management apparatus; and a circuit control section that changes a number of serially connected batteries of the plurality of storage batteries through detection of the physical event change, in which when the signal detection section detects start of charging the plurality of storage batteries as the physical event change, the circuit control section increases the number of serially connected batteries of the plurality of storage batteries compared to a number of serially connected batteries thereof at the time of discharging.

In the storage battery management apparatus according to the present disclosure, the chargeable electricity quantity adjusting section starts charging a storage battery whose quantity of chargeable electricity is equal to or above the target quantity of electricity, and the chargeable electricity quantity adjusting section ends charging the storage battery when the quantity of chargeable electricity of the storage battery reaches the target quantity of electricity.

In the storage battery management apparatus according to the present disclosure, the chargeable electricity quantity adjusting section calculates an integrated value of a current flowing through the storage battery after starting discharging the storage battery whose quantity of chargeable electricity is equal to or above the target quantity of electricity until the quantity of chargeable electricity of the storage battery reaches the target quantity of electricity, and updates the quantity of chargeable electricity based on the integrated value of the current.

In the storage battery management apparatus according to the present disclosure, the chargeable electricity quantity adjusting section identifies a storage battery having a smallest quantity of chargeable electricity from among the plurality of storage batteries and sets the quantity of chargeable electricity of the identified storage battery as the target quantity of electricity.

In the storage battery management apparatus according to the present disclosure, the chargeable electricity quantity adjusting section identifies a storage battery having a smallest quantity of chargeable electricity among the plurality of storage batteries and sets a value even smaller than the quantity of chargeable electricity of the identified storage battery as the target quantity of electricity.

The storage battery management apparatus according to the present disclosure further includes a signal detection section that detects a physical event change occurring in the storage battery management apparatus, in which when the signal detection section detects a voltage change with respect to the plurality of storage batteries as the physical event change, the chargeable electricity quantity adjusting section changes a number of serially connected batteries of the plurality of storage batteries according to the changed voltage, switches a combination of serially connected storage batteries and thereby controls discharging or charging of the plurality of storage batteries so that part or whole of the quantities of chargeable electricity of the plurality of storage batteries reaches a common target quantity of electricity.

A storage battery management method according to the present disclosure is a method of switching a number of storage batteries used or a number of storage batteries connected in series or in parallel as a connection mode of the plurality of storage batteries and discharging or charging the storage batteries, the method including: calculating and managing a quantity of chargeable electricity which is a quantity of electricity chargeable for each of the plurality of storage batteries to be charged from a current charging state to a fully charged state; and controlling discharging or charging of the plurality of storage batteries so that part or whole of the quantities of chargeable electricity of the plurality of storage batteries reaches a common target quantity of electricity.

**EP 2 897 247 B1**

Industrial Applicability

The storage battery management apparatus and the storage battery management method according to the present invention are useful for an apparatus and a method for performing charging and discharging using a plurality of storage batteries. The present invention is suitable for use in, for example, a system that stores, in storage batteries, the power generated through elements of high-voltage power generation such as solar power generation or wind power generation, and charges the power in batteries of electric automobiles, electric scooters or electric-power-assisted bicycles or the like.

Reference Signs List

      10 Storage battery group
      11, 12, 13 Storage battery
      20 Power generation apparatus
      30 Loading apparatus
      40, 41, 42 Control apparatus
      50, 51, 52 Electric circuit
      60 Signal
      100 Storage battery management apparatus
      110, 111, 112 Storage battery circuit section
      120 Chargeable electricity quantity management section
      130, 131 Chargeable electricity quantity adjusting section
      140 Signal detection section
      150 Circuit control section
      R11, R12, R13 Current shunt resistor
      SW11, SW12, SW13, SW14, SWa1, SWa2, SWa3, SWa4, SWb1, SWb2, SW21, SW22, SW23 Relay switch
      T1, T2, Ta, Tb Terminal

Claims

1. A storage battery management apparatus (100) that switches a plurality of storage batteries (10) used or a plurality of storage batteries (10) connected in - series or in parallel as a connection mode of the plurality of storage batteries (10) and that discharges or charges the storage batteries, the apparatus (100) comprising:

      a chargeable electricity quantity management section (120) adapted to calculate and manage, for each of the plurality of storage batteries (10), a quantity of chargeable electricity which is a quantity of electricity chargeable to be charged from a current charging state to a fully charged state; and
      a chargeable electricity quantity adjusting section (130, 131) adapted to control discharging or charging of the plurality of storage batteries (10) so that part or whole of the quantities of chargeable electricity of the plurality of storage batteries (10) reaches a common target quantity of electricity,
      **characterized in that** the storage battery management apparatus (100) further comprises:

      a circuit control section (150) adapted to make the plurality of storage batteries (10) connected in parallel during discharging the storage batteries and to make the plurality of storage batteries (10) connected in series during charging the storage batteries; and
      a chargeable electricity quantity adjusting section (130, 131) adapted to calculate, for each of the plurality of storage batteries (10), an integrated value of a current discharged from the storage battery while the plurality of storage batteries (10) are connected in parallel,
      wherein the chargeable electricity quantity management section (120) is further adapted to calculate the quantity of chargeable electricity based on the calculated integrated value of the current.

2. The storage battery management apparatus (100) according to claim 1, wherein
   the chargeable electricity quantity adjusting section (131) is further adapted to start discharging a storage battery whose quantity of chargeable electricity is equal to or below the target quantity of electricity, and
   the chargeable electricity quantity adjusting section (131) is further adapted to end discharging the storage battery

16

when the quantity of chargeable electricity of the storage battery reaches the target quantity of electricity.

3. The storage battery management apparatus (100) according to claim 2, wherein the chargeable electricity quantity adjusting section (131) is further adapted to calculate the integrated value of the current after starting discharging the storage battery whose quantity of chargeable electricity is equal to or below the target quantity of electricity until the quantity of chargeable electricity of the storage battery reaches the target quantity of electricity, and to update the quantity of chargeable electricity based on the integrated value of the current.

4. The storage battery management apparatus (100) according to claim 1, wherein the chargeable electricity quantity adjusting section (131) is further adapted to identify a storage battery from among the plurality of storage batteries (10) and to set the quantity of chargeable electricity of the identified storage battery as the target quantity of electricity.

5. The storage battery management apparatus (100) according to claim 1, wherein the chargeable electricity quantity adjusting section (131) is further adapted to identify a storage battery having a largest quantity of chargeable electricity among the plurality of storage batteries and to set the quantity of chargeable electricity of the identified, storage battery as the target quantity of electricity.

6. The storage battery management apparatus (100) according to claim 1, wherein the chargeable electricity quantity adjusting section (131) is further adapted to identify a storage battery having a largest quantity of chargeable electricity among the plurality of storage batteries (10) and to set a value even larger than the quantity of chargeable electricity of the identified storage battery as the target quantity of electricity.

7. The storage battery management apparatus (100) according to claim 1, further comprising:

a signal detection section (140) adapted to detect a physical event change on the storage battery management apparatus (100);
wherein the circuit control section (150) is further adapted to increase the number of serially connected batteries of the plurality of storage batteries (10) compared to a number of serially connected batteries thereof at the time of discharging, when the signal detection section (140) detects start of charging the plurality of storage batteries (10) as the physical event change.

8. The storage battery management apparatus (100) according to claim 1, wherein
the chargeable electricity quantity adjusting section (130, 131) is further adapted to start charging a storage battery whose quantity of chargeable electricity is equal to or above the target quantity of electricity, and
the chargeable electricity quantity adjusting section (130, 131) is further adapted to end charging the storage battery when the quantity of chargeable electricity of the storage battery reaches the target quantity of electricity.

9. The storage battery management apparatus (100) according to claim 1, wherein the chargeable electricity quantity adjusting section (131, 131) is further adapted to calculate the integrated value of the current after starting discharging the storage battery whose quantity of chargeable electricity is equal to or above the target quantity of electricity until the quantity of chargeable electricity of the storage battery reaches the target quantity of electricity, and to update the quantity of chargeable electricity based on the integrated value of the current.

10. The storage battery management apparatus (100) according to claim 1, wherein the chargeable electricity quantity adjusting section (131) is further adapted to identify a storage battery having a smallest quantity of chargeable electricity from among the plurality of storage batteries (10) and to set the quantity of chargeable electricity of the identified storage battery as the target quantity of electricity.

11. The storage battery management apparatus (100) according to claim 1, wherein the chargeable electricity quantity adjusting section (131) is further adapted to identify a storage battery having a smallest quantity of chargeable electricity among the plurality of storage batteries (10) and to set a value even smaller than the quantity of chargeable electricity of the identified storage battery as the target quantity of electricity.

12. The storage battery management apparatus (100) according to claim 1, further comprising a signal detection section (140) adapted to detect a physical event change occurring in the storage battery management apparatus (100), wherein
the circuit control section (150) is further adapted to change a number of serially connected batteries of the plurality of storage batteries (10) according to the changed voltage, when the signal detection section (140) detects a voltage change with respect to the plurality of storage batteries (10) as the physical event change, and
the chargeable electricity quantity adjusting section (131) is further adapted to switch a combination of serially connected storage batteries and thereby controls discharging or charging of the plurality of storage batteries (10) so that part or whole of the quantities of chargeable electricity of the plurality of storage batteries (10) reaches a common target quantity of electricity.

13. A storage battery management method of switching a number of storage batteries used or a number of storage batteries connected in series or in parallel as a connection mode of the plurality of storage batteries and discharging or charging the storage batteries, the method comprising the steps of:

calculating and managing (S101, S106), for each of the plurality of storage batteries, a quantity of chargeable electricity which is a quantity of electricity chargeable to be charged from a current charging state to a fully charged state; and
controlling (S102-S104, S107) discharging or charging of the plurality of storage batteries so that part or whole of the quantities of chargeable electricity of the plurality of storage batteries reaches a common target quantity of electricity,
**characterized in that** the method further comprises the steps of:

making the plurality of storage batteries connected in parallel during discharging the storage batteries;
making the plurality of storage batteries connected in series during charging the storage batteries; and
calculating (S105), for each of the plurality of storage batteries, an integrated value of a current discharged from the storage battery while the plurality of storage batteries are connected in parallel,
wherein in the calculating and managing step (S101, S106), the quantity of chargeable electricity is calculated based on the calculated integrated value of the current.

**Patentansprüche**

1. Speicherbatterieverwaltungsvorrichtung (100), die eine Vielzahl von verwendeten Speicherbatterien (10) oder eine Vielzahl von Speicherbatterien (10), die in Reihe oder parallel als Verbindungsmodus der Vielzahl von Speicherbatterien (10) geschaltet sind, schaltet und die Speicherbatterien entlädt oder lädt, wobei die Vorrichtung (100) umfasst:

einen Verwaltungsabschnitt (120) für die ladbare Strommenge, der dazu eingerichtet ist, für jede aus der Vielzahl von Speicherbatterien (10) eine Menge des ladbaren Stroms zu berechnen und zu verwalten, bei dem es sich um eine Strommenge handelt, die aus einem aktuellen Ladezustand in einen voll aufgeladenen Zustand geladen werden kann; und
einen Anpassungsabschnitt (130, 131) für die ladbare Strommenge, der dazu eingerichtet ist, die Entladung oder Ladung der Vielzahl von Speicherbatterien (10) so zu steuern, dass ein Teil oder die gesamte Menge des ladbaren Stroms der Vielzahl von Speicherbatterien (10) eine gemeinsame Zielmenge an Strom erreicht,
**dadurch gekennzeichnet, dass** die Speicherbatterieverwaltungsvorrichtung (100) des Weiteren umfasst:

einen Schaltungssteuerungsabschnitt (150), der dazu eingerichtet ist, die Vielzahl von Speicherbatterien (10) während der Entladung der Speicherbatterien parallel zu schalten und die Vielzahl der Speicherbatterien (10) während des Ladens der Speicherbatterien in Reihe zu schalten; und
einen Anpassungsabschnitt (130, 131) für die ladbare Strommenge, der dazu eingerichtet ist, für jede aus der Vielzahl von Speicherbatterien (10) einen integrierten Wert eines Stroms zu berechnen, der aus der Speicherbatterie entladen wird, während die Vielzahl der Speicherbatterien (10) parallel geschaltet ist,
wobei der Verwaltungsabschnitt (120) für die ladbare Strommenge des Weiteren dazu eingerichtet ist, die Menge des ladbaren Stroms basierend auf dem berechneten integrierten Wert des Stroms zu berechnen.

2. Speicherbatterieverwaltungsvorrichtung (100) nach Anspruch 1, wobei
der Anpassungsabschnitt (131) für die ladbare Strommenge des Weiteren dazu eingerichtet ist, die Entladung einer Speicherbatterie zu beginnen, deren Menge an ladbarem Strom gleich oder kleiner als die Zielmenge an Strom ist, und
der Anpassungsabschnitt (131) für die ladbare Strommenge des Weiteren dazu eingerichtet ist, die Entladung der Speicherbatterie zu beenden, wenn Menge an ladbarem Strom der Speicherbatterie die Zielmenge an Strom erreicht.

3. Speicherbatterieverwaltungsvorrichtung (100) nach Anspruch 2, wobei der Anpassungsabschnitt (131) für die ladbare Strommenge des Weiteren dazu eingerichtet ist, den integrierten Wert des Stroms nach dem Beginn der Entladung der Speicherbatterie zu berechnen, deren Menge an ladbarem Strom gleich oder niedriger als die Zielmenge an Strom ist, bis die Menge an ladbarem Strom der Speicherbatterie die Zielmenge an Strom erreicht, und die Menge an ladbarem Strom basierend auf dem integrierten Wert des Stroms zu aktualisieren.

4. Speicherbatterieverwaltungsvorrichtung (100) nach Anspruch 1, wobei der Anpassungsabschnitt (131) für die ladbare Strommenge des Weiteren dazu eingerichtet ist, eine Speicherbatterie aus der Vielzahl von Speicherbatterien (10) zu identifizieren, und die Menge an ladbarem Strom der identifizierten Speicherbatterie als die Zielmenge an Strom festzulegen.

5. Speicherbatterieverwaltungsvorrichtung (100) nach Anspruch 1, wobei der Anpassungsabschnitt (131) für die ladbare Strommenge des Weiteren dazu eingerichtet ist, eine Speicherbatterie mit einer größten Menge an ladbarem Strom aus der Vielzahl von Speicherbatterien zu identifizieren, und die Menge an ladbarem Strom der identifizierten Speicherbatterie als die Zielmenge an Strom festzulegen.

6. Speicherbatterieverwaltungsvorrichtung (100) nach Anspruch 1, wobei der Anpassungsabschnitt (131) für die ladbare Strommenge des Weiteren dazu eingerichtet ist, eine Speicherbatterie mit einer größten Menge an ladbarem Strom aus der Vielzahl von Speicherbatterien (10) zu identifizieren und einen noch größeren Wert als die Menge an ladbarem Strom der identifizierten Speicherbatterie als die Zielmenge an Strom festzulegen.

7. Speicherbatterieverwaltungsvorrichtung (100) nach Anspruch 1, des Weiteren umfassend:

einen Signalermittlungsabschnitt (140), der dazu eingerichtet ist, eine physische Ereignisänderung an der Speicherbatterieverwaltungsvorrichtung (100) zu ermitteln;
wobei der Schaltungssteuerungsabschnitt (150) des Weiteren dazu eingerichtet ist, die Anzahl der in Reihe geschalteten Batterien aus der Vielzahl von Speicherbatterien (10) im Vergleich zu einer Anzahl der in Reihe geschalteten Batterien zum Zeitpunkt der Entladung zu erhöhen, wenn der Signalermittlungsabschnitt (140) den Beginn der Ladung der Vielzahl von Speicherbatterien (10) als die physische Ereignisänderung ermittelt.

8. Speicherbatterieverwaltungsvorrichtung (100) nach Anspruch 1, wobei
der Anpassungsabschnitt (130, 131) für die ladbare Strommenge des Weiteren dazu eingerichtet ist, die Ladung einer Speicherbatterie zu beginnen, deren Menge an ladbarem Strom gleich oder größer als die Zielmenge an Strom ist, und
der Anpassungsabschnitt (130, 131) für die ladbare Strommenge des Weiteren dazu eingerichtet ist, die Ladung der Speicherbatterie zu beenden, wenn die Menge an ladbarem Strom der Speicherbatterie die Zielmenge an Strom erreicht.

9. Speicherbatterieverwaltungsvorrichtung (100) nach Anspruch 1, wobei der Anpassungsabschnitt (131, 131) für die ladbare Strommenge des Weiteren dazu eingerichtet ist, den integrierten Wert des Stroms nach dem Beginn der Entladung der Speicherbatterie zu berechnen, deren Menge an ladbarem Strom gleich oder größer als die Zielmenge an Strom ist, bis die Menge an ladbarem Strom der Speicherbatterie die Zielmenge an Strom erreicht, und die Menge an ladbarem Strom basierend auf dem integrierten Wert des Stroms zu aktualisieren.

10. Speicherbatterieverwaltungsvorrichtung (100) nach Anspruch 1, wobei der Anpassungsabschnitt (131) für die ladbare Strommenge des Weiteren dazu eingerichtet ist, eine Speicherbatterie mit einer kleinsten Menge an ladbarem Strom aus der Vielzahl von Speicherbatterien (10) zu identifizieren, und die Menge an ladbarem Strom der identifizierten Speicherbatterie als die Zielmenge an Strom festzulegen.

11. Speicherbatterieverwaltungsvorrichtung (100) nach Anspruch 1, wobei der Anpassungsabschnitt (131) für die ladbare Strommenge des Weiteren dazu eingerichtet ist, eine Speicherbatterie mit einer kleinsten Menge an ladbarem Strom aus der Vielzahl von Speicherbatterien (10) zu identifizieren, und einen noch kleineren Wert als die Menge an ladbarem Strom der identifizierten Speicherbatterie als die Zielmenge an Strom festzulegen.

12. Speicherbatterieverwaltungsvorrichtung (100) nach Anspruch 1, des Weiteren umfassend einen Signalermittlungsabschnitt (140), der dazu eingerichtet ist, eine physische Ereignisänderung zu ermitteln, die in der Speicherbatterieverwaltungsvorrichtung (100) auftritt, wobei
der Schaltungssteuerungsabschnitt (150) des Weiteren dazu eingerichtet ist, die Anzahl der in Reihe geschalteten Batterien aus der Vielzahl von Speicherbatterien (10) entsprechend der geänderten Spannung zu ändern, wenn der Signalermittlungsabschritt (140) eine Spannungsänderung bezüglich der Vielzahl von Speicherbatterien (10) als die physische Ereignisänderung ermittelt, und

der Anpassungsabschnitt (131, 131) für die ladbare Strommenge des Weiteren dazu eingerichtet ist, eine Kombination aus in Reihe geschalteten Speicherbatterien zu schalten und dadurch die Entladung oder Ladung der Vielzahl von Speicherbatterien (10) so zu steuern, dass ein Teil oder die gesamte Menge des ladbaren Stroms der Vielzahl von Speicherbatterien (10) eine gemeinsame Zielmenge an Strom erreicht,

13. Speieherbatterieverwaltungsverfahren (100) zum Schalten einer Anzahl von verwendeten Speicherbatterien oder einer Anzahl von Speicherbatterien, die in Reihe oder parallel als Verbindungsmodus der Vielzahl von Speicherbatterien geschaltet sind, und zum Entladen oder Laden der Speicherbatterien, wobei das Verfahren folgende Schritte umfasst:

Berechnen und Verwalten (S101, S106) für jede aus der Vielzahl von Speicherbatterien, einer Menge des ladbaren Stroms, bei dem es sich um eine Strommenge handelt, die aus einem aktuellen Ladezustand in einen voll aufgeladenen Zustand geladen werden kann; und

Steuern (S102-S104, S107) der Entladung oder Ladung der Vielzahl von Speicherbatterien, so dass ein Teil oder die gesamte Menge des ladbaren Stroms der Vielzahl von Speicherbatterien eine gemeinsame Zielmenge an Strom erreicht,

**dadurch gekennzeichnet, dass** das Verfahren folgende Schritte umfasst:

Parallelschalten der Vielzahl von Speicherbatterien während der Entladung der Speicherbatterien;
In-Reihe-Schalten der Vielzahl von Speicherbatterien während des Ladens der Speicherbatterien; und
Berechnen (S105), für jede aus der Vielzahl von Speicherbatterien, eines integrierten Wertes eines Stroms, der aus der Speicherbatterie entladen wird, während die Vielzahl der Speicherbatterien parallel geschaltet ist,
wobei in dem Schritt zum Berechnen und Verwalten (S101, S106) die Menge des ladbaren Stroms basierend auf dem berechneten integrierten Wert des Stroms berechnet wird.

## Revendications

1. Appareil de gestion de batteries de stockage (100) qui commute une pluralité de batteries de stockage (10) utilisées ou une pluralité de batteries de stockage (10) connectées en série ou en parallèle comme mode de connexion de la pluralité de batteries de stockage (10) et qui charge ou décharge les batteries de stockage, l'appareil (100) comprenant :

une section de gestion de quantité d'électricité chargeable (120) adaptée pour calculer et gérer, pour chaque batterie de la pluralité de batteries de stockage (10), une quantité d'électricité chargeable, qui est une quantité d'électricité chargeable à charger depuis un état de charge courant jusqu'à un état entièrement chargé ; et
une section d'ajustement de quantité d'électricité chargeable (130, 131) adaptée pour contrôler la charge ou la décharge de la pluralité de batteries de stockage (10) de telle sorte qu'une partie ou l'entièreté des quantités d'électricité chargeable de la pluralité de batteries de stockage (10) atteigne une quantité d'électricité cible commune,
**caractérisé en ce que** l'appareil de gestion de batteries de stockage (100) comprend en outre :

une section de contrôle de circuit (150) adaptée pour connecter la pluralité de batteries de stockage (10) en parallèle durant la décharge des batteries de stockage et pour connecter la pluralité de batteries de stockage (10) en série durant la charge des batteries de stockage ; et
une section d'ajustement de quantité d'électricité chargeable (130, 131) adaptée pour calculer, pour chaque batterie de la pluralité de batteries de stockage (10), une valeur intégrée d'un courant déchargé par la batterie de stockage alors que les batteries de la pluralité de batteries de stockage (10) sont connectées en parallèle,
dans lequel la section de gestion de quantité d'électricité chargeable (120) est en outre adaptée pour calculer la quantité d'électricité chargeable sur base de la valeur intégrée du courant calculée.

2. Appareil de gestion de batteries de stockage (100) selon la revendication 1, dans lequel
la section d'ajustement de quantité d'électricité chargeable (131) est en outre adaptée pour commencer la décharge d'une batterie de stockage dont la quantité d'électricité chargeable est inférieure ou égale à la quantité d'électricité cible, et

la section d'ajustement de quantité d'électricité chargeable (131) est en outre adaptée pour terminer la décharge de la batterie de stockage quand la quantité d'électricité chargeable de la batterie de stockage atteint la quantité d'électricité cible.

3. Appareil de gestion de batteries de stockage (100) selon la revendication 2, dans lequel la section d'ajustement de quantité d'électricité chargeable (131) est en outre adaptée pour calculer la valeur intégrée du courant après le démarrage de la décharge de la batterie de stockage dont la quantité d'électricité chargeable est inférieure ou égale à la quantité d'électricité cible jusqu'à ce que la quantité d'électricité chargeable de la batterie de stockage atteigne la quantité d'électricité cible, et pour mettre à jour la quantité d'électricité chargeable sur base de la valeur intégrée du courant.

4. Appareil de gestion de batteries de stockage (100) selon la revendication 1, dans lequel la section d'ajustement de quantité d'électricité chargeable (131) est en outre adaptée pour identifier une batterie de stockage parmi la pluralité de batteries de stockage (10) et pour déterminer la quantité d'électricité chargeable de la batterie de stockage identifiée comme quantité d'électricité cible.

5. Appareil de gestion de batteries de stockage (100) selon la revendication 1, dans lequel la section d'ajustement de quantité d'électricité chargeable (131) est en outre adaptée pour identifier une batterie de stockage ayant la plus grande quantité d'électricité chargeable parmi la pluralité de batteries de stockage et pour déterminer la quantité d'électricité chargeable de la batterie de stockage identifiée comme quantité d'électricité cible.

6. Appareil de gestion de batteries de stockage (100) selon la revendication 1, dans lequel la section d'ajustement de quantité d'électricité chargeable (131) est en outre adaptée pour identifier une batterie de stockage ayant la plus grande quantité d'électricité chargeable parmi la pluralité de batteries de stockage (10) et pour déterminer une valeur même supérieure à la quantité d'électricité chargeable de la batterie de stockage identifiée comme quantité d'électricité cible.

7. Appareil de gestion de batteries de stockage (100) selon la revendication 1, comprenant en outre :

une section de détection de signal (140) adaptée pour détecter un changement d'événement physique sur l'appareil de gestion de batteries de stockage (100) ;
dans lequel la section de contrôle de circuit (150) est en outre adaptée pour augmenter le nombre de batteries connectées en série parmi la pluralité de batteries de stockage (10) par rapport au nombre de batteries connectées en série de ladite pluralité au moment de la décharge, quand la section de détection de signal (140) détecte un démarrage de charge de la pluralité de batteries de stockage (10) comme étant le changement d'événement physique.

8. Appareil de gestion de batteries de stockage (100) selon la revendication 1, dans lequel
la section d'ajustement de quantité d'électricité chargeable (130, 131) est en outre adaptée pour commencer la charge d'une batterie de stockage dont la quantité d'électricité chargeable est supérieure ou égale à la quantité d'électricité cible, et
la section d'ajustement de quantité d'électricité chargeable (130, 131) est en outre adaptée pour terminer la charge de la batterie de stockage quand la quantité d'électricité chargeable de la batterie de stockage atteint la quantité d'électricité cible.

9. Appareil de gestion de batteries de stockage (100) selon la revendication 1, dans lequel la section d'ajustement de quantité d'électricité chargeable (130, 131) est en outre adaptée pour calculer la valeur intégrée du courant après le démarrage de la décharge de la batterie de stockage dont la quantité d'électricité chargeable est supérieure ou égale à la quantité d'électricité cible jusqu'à ce que la quantité d'électricité chargeable de la batterie de stockage atteigne la quantité d'électricité cible, et pour mettre à jour la quantité d'électricité chargeable sur base de la valeur intégrée du courant.

10. Appareil de gestion de batteries de stockage (100) selon la revendication 1, dans lequel la section d'ajustement de quantité d'électricité chargeable (131) est en outre adaptée pour identifier une batterie de stockage ayant la plus petite quantité d'électricité chargeable parmi la pluralité de batteries de stockage (10) et pour déterminer la quantité d'électricité chargeable de la batterie de stockage identifiée comme quantité d'électricité cible.

**11.** Appareil de gestion de batteries de stockage (100) selon la revendication 1, dans lequel la section d'ajustement de quantité d'électricité chargeable (131) est en outre adaptée pour identifier une batterie de stockage ayant la plus petite quantité d'électricité chargeable parmi la pluralité de batteries de stockage (10) et pour déterminer une valeur même inférieure à la quantité d'électricité chargeable de la batterie de stockage identifiée comme quantité d'électricité cible.

**12.** Appareil de gestion de batteries de stockage (100) selon la revendication 1, comprenant en outre une section de détection de signal (140) adaptée pour détecter un changement d'événement physique se produisant dans l'appareil de gestion de batteries de stockage (100), dans lequel

la section de contrôle de circuit (150) est en outre adaptée pour changer un nombre de batteries connectées en série parmi la pluralité de batteries de stockage (10) en fonction de la tension changée, quand la section de détection de signal (140) détecte un changement de tension par rapport à la pluralité de batteries de stockage (10) comme étant le changement d'événement physique, et

la section d'ajustement de quantité d'électricité chargeable (131) est en outre adaptée pour commuter une combinaison de batteries de stockage connectées en série et contrôler ainsi la charge ou la décharge de la pluralité de batteries de stockage (10) de telle sorte qu'une partie ou l'entièreté des quantités d'électricité chargeable de la pluralité de batteries de stockage (10) atteigne une quantité d'électricité cible commune.

**13.** Procédé de gestion de batteries de stockage consistant à commuter un certain nombre de batteries de stockage utilisées ou un certain nombre de batteries de stockage connectées en série ou en parallèle comme mode de connexion de la pluralité de batteries de stockage, et à charger ou décharger les batteries de stockage, le procédé comprenant les étapes suivantes :

calcul et gestion (S101, S106), pour chaque batterie de la pluralité de batteries de stockage, d'une quantité d'électricité chargeable qui est une quantité d'électricité chargeable à charger depuis un état de charge courant jusqu'à un état entièrement chargé ; et

contrôle (S102-S104, S107) de la charge ou de la décharge de la pluralité de batteries de stockage de telle sorte qu'une partie ou l'entièreté des quantités d'électricité chargeable de la pluralité de batteries de stockage atteigne une quantité d'électricité cible commune,

**caractérisé en ce que** le procédé comprend en outre les étapes suivantes :

connexion en parallèle de la pluralité de batteries de stockage durant la décharge des batteries de stockage ;
connexion en série de la pluralité de batteries de stockage durant la charge des batteries de stockage ; et
calcul (S105), pour chaque batterie de la pluralité de batteries de stockage, d'une valeur intégrée d'un courant déchargé par la batterie de stockage alors que les batteries de la pluralité de batteries de stockage sont connectées en parallèle,

dans lequel, à l'étape de calcul et de gestion (S101, S106), la quantité d'électricité chargeable est calculée sur base de la valeur intégrée du courant calculée.

FIG. 1

FIG. 2

START

ACQUIRE CURRENT QUANTITY OF
CHARGEABLE ELECTRICITY AND SET TARGET
QUANTITY OF ELECTRICITY                    — S101

S102

IS THERE STORAGE
BATTERY WHOSE QUANTITY OF CHARGEABLE
ELECTRICITY IS EQUAL TO OR BELOW TARGET
QUANTITY OF ELECTRICITY?                                    NO

YES

SELECT AND DISCHARGE STORAGE BATTERY WHOSE
QUANTITY OF CHARGEABLE ELECTRICITY IS EQUAL        — S103
TO OR BELOW TARGET QUANTITY OF ELECTRICITY

S104

HAS QUANTITY
OF CHARGEABLE ELECTRICITY OF SELECTED
STORAGE BATTERY REACHED TARGET QUANTITY
OF ELECTRICITY?

YES

S107

NO

ALLOW NO CURRENT TO
FLOW THROUGH SELECTED
STORAGE BATTERY

CALCULATE CURRENT INTEGRATED
VALUE OF STORAGE BATTERY             — S105

UPDATE QUANTITY OF CHARGEABLE
ELECTRICITY OF STORAGE BATTERY      — S106

FIG. 3

END

FIG. 4

- - - - - - - ELECTRICITY FLOW

——————— DATA FLOW

FIG. 5

|  | SWa | SWb |
|---|---|---|
| (a) | OFF | ON |
| (b) | OFF | OFF |
| (c) | ON | OFF |

FIG. 6

FIG. 7A

FIG. 7B

FIG. 7C

EP 2 897 247 B1

**20** POWER GENERATION APPARATUS

**30** LOADING APPARATUS

**100**
STORAGE BATTERY MANAGEMENT APPARATUS

**112**

STORAGE BATTERY CIRCUIT SECTION

**10**
STORAGE BATTERY GROUP

**60**
SIGNAL

**140** SIGNAL DETECTION SECTION

**131** CHARGEABLE ELECTRICITY QUANTITY ADJUSTING SECTION

**120** CHARGEABLE ELECTRICITY QUANTITY MANAGEMENT SECTION

------- ELECTRICITY FLOW

——— DATA FLOW

FIG. 8

FIG. 9

FIG. 10

**REFERENCES CITED IN THE DESCRIPTION**

**Patent documents cited in the description**

- JP 2004023993 A
- US 20120187898 A1
- US 2004135545 A1
- WO 2012081696 A1